(19) **Europäisches Patentamt**
**European Patent Office**
**Office européen des brevets**

(11) **EP 4 783 261 A1**

(12) **EUROPEAN PATENT APPLICATION**
published in accordance with Art. 153(4) EPC

(43) Date of publication:
**29.07.2026 Bulletin 2026/31**

(21) Application number: **24868280.9**

(22) Date of filing: **18.09.2024**

(51) International Patent Classification (IPC):
**H01M 4/525** (2010.01)     **C01G 53/00** (2025.01)
**H01M 4/505** (2010.01)

(52) Cooperative Patent Classification (CPC):
**C01G 53/00; H01M 4/505; H01M 4/525;**
**Y02E 60/10**

(86) International application number:
**PCT/JP2024/033304**

(87) International publication number:
**WO 2025/063203 (27.03.2025 Gazette 2025/13)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority:    **21.09.2023   JP 2023156570**
                  **15.03.2024   JP 2024041351**

(71) Applicant: **Proterial, Ltd.**
**Tokyo 135-0061 (JP)**

(72) Inventors:
• **NAKABAYASHI, Takashi**
  **Tokyo 135-0061 (JP)**
• **TOKORO, Hisato**
  **Tokyo 135-0061 (JP)**

(74) Representative: **Becker, Eberhard**
**Becker Kurig & Partner**
**Patentanwälte mbB**
**Bavariastraße 7**
**80336 München (DE)**

(54) **PRECURSOR OF POSITIVE ELECTRODE ACTIVE MATERIAL FOR LITHIUM-ION SECONDARY BATTERY, METHOD FOR PRODUCING SAME, POSITIVE ELECTRODE ACTIVE MATERIAL FOR LITHIUM-ION SECONDARY BATTERY, AND METHOD FOR PRODUCING SAME**

(57)     The objective of the present invention is to provide: a method for producing a precursor of a positive electrode active material for a lithium-ion secondary battery which contributes to a reduction in GHG emissions and is easily pulverized; and a method for producing a positive electrode active material for a lithium-ion secondary battery. In addition, the objective of the present invention is to provide: a precursor which can be easily pulverized; and a positive electrode active material for a lithium-ion secondary battery which has a stable crystal structure and good electrochemical characteristics. The method for producing a precursor of a positive electrode active material for a lithium-ion secondary battery includes: a mixing step for mixing a metallic nickel powder and a lithium-containing compound; and an oxidation step for oxidizing the metallic nickel powder after mixing, wherein the precursor obtained after the oxidation step includes a lithium metal oxide having a peak at $2\theta=43.5\text{-}44.0°$ as measured by X-ray powder diffraction.

FIG. 1

## Description

Technical Field

The invention relates to a precursor of a positive electrode active material for a lithium-ion secondary battery and a method for producing the same, and a positive electrode active material for a lithium-ion secondary battery and a method for producing the same.

Related Art

Lithium-ion secondary batteries are widely used in various fields such as electronics, automobiles, and infrastructure. In automobiles in particular, lithium-ion secondary batteries are used as the power source for electric vehicles (EV) and have become an important key component. From the viewpoint of increasing the driving range, the energy density of lithium-ion secondary batteries has been improving year by year, and high-capacity ternary layered materials are used as the positive electrode active material used in batteries. The ternary layered materials are composite oxides (hereinafter, lithium metal composite oxides) of metal elements such as nickel (Ni), cobalt (Co), manganese (Mn), or aluminum (Al) with lithium (Li). Also, from the viewpoint of maintaining a sustainable global environment, reduction of greenhouse gas (GHG) emissions accompanying the production of positive electrode active materials is required.

Patent Document 1 describes a method for producing a positive electrode active material by using metal hydroxide as a precursor. A process for producing a positive electrode active material by reacting a lithium source (Li source) with a metal hydroxide is widely adopted. Also, Patent Document 2 describes a method of production in which a nickel source is melted, nickel particles obtained by an atomization method are dissolved in a sulfuric acid aqueous solution to obtain nickel sulfate, and then a hydroxide containing Ni is obtained by a crystallization method, and the hydroxide is used to obtain a positive electrode active material for the secondary battery by using a coprecipitation method. Furthermore, Patent Document 3 describes a method for producing a positive electrode active material by using a nickel raw material containing nickel metal.

Citation List

Patent Document(s)

Patent Document 1: Japanese Patent Application Laid-Open Publication No. 2015-002120
Patent Document 2: International Publication No. WO 2020/066262
Patent Document 3: International Publication No. WO 2010/082240

SUMMARY OF INVENTION

Technical Problem

As described in Patent Document 1 and Patent Document 2, a positive electrode active material is generally produced by reacting a Li source with hydroxide particles of a transition metal synthesized by coprecipitation reaction. In the coprecipitation reaction, an aqueous solution such as nickel sulfate is used as a raw material, but nickel sulfate is produced by acid dissolution of high-purity refined nickel metal to avoid impurities. Nickel sulfate has an issue of high GHG emissions during production because nickel is refined from nickel ore mined from mines and undergoes processing such as acid dissolution. Also, since nickel sulfate is a hexahydrate, the Ni content is about 20 mass% to 25 mass% and the bulk specific gravity is small, and to compensate for this, the volume handled in the production process of the positive electrode active material becomes large. At the same time, the transportation cost also increases. For these reasons, the energy required for transportation and production increases, and the production process becomes complicated and lengthy. As a result, there is an issue that GHG emissions increase. Furthermore, since nickel sulfate is used as an aqueous solution as described above, water resource consumption also increases. In addition, at the time of reacting nickel sulfate, etc., as an auxiliary material, with a sodium hydroxide or ammonia to produce hydroxide particles as a precursor, sulfide-based waste such as sodium sulfate and waste liquid containing ammonia are generated as by-products. The process for the sulfide-based and other wastes also incurs at a high cost.

In Patent Document 3, since calcination is performed with nickel metal as is, sintering occurs during the calcination process, making it impossible to maintain the particle state and difficult to pulverize. Also, the crystal structure of the positive electrode active material is unstable, and therefore the electrochemical properties of the lithium-ion secondary battery were also unstable.

The invention aims to provide a method for producing a precursor of a positive electrode active material for lithium-ion secondary battery and a method for producing positive electrode active material for a lithium-ion secondary battery that can contribute to reduction of the GHG emissions and improvement of the ease of milling. The invention also aims to provide a precursor that is easy to pulverize, and a positive electrode active material for a lithium-ion secondary battery having a stable crystal structure and good electrochemical properties.

Solution to Problem

The production method of the invention uses metal nickel powder, which is a raw material with lower GHG emissions during production than conventional nickel sulfate, as a nickel source. The gist is that metal nickel powder and a lithium-containing compound are subjected to oxidation reaction.

A method for producing a precursor of a positive electrode active material for a lithium-ion secondary battery according to the invention includes: a mixing process of mixing metal nickel powder and a lithium-containing compound; and an oxidation process of, after mixing, oxidizing the metal nickel powder. A precursor obtained after the oxidation process includes a lithium metal oxide having a peak at 2θ = 43.5° or more and 44.0° or less in X-ray powder diffraction measurement.

A lithiation rate of the precursor indicating a proportion of the metal nickel powder having reacted with the lithium may be 8% or more.

An average particle diameter of the metal nickel powder may exceeds 20 μm, and a lithiation rate of the precursor may be 10% or more.

The precursor obtained after the oxidation process may include nickel oxide in which an oxidation rate indicating a ratio of an amount of oxidated nickel among a total amount of Ni included in the precursor is 10% or more and less than 100%.

In addition, in the method of the invention, in a case where an amount of a lithium compound necessary for producing the positive electrode active material for the lithium-ion secondary battery is set to be 100 mass%, a mixing amount of a compound including the lithium in the mixing process may be 10 mass% or more and less than 100 mass%.

A method for producing a positive electrode active material for a lithium-ion secondary battery includes: a calcination process of obtaining mixed powder by mixing the precursor produced according to the method for producing the precursor of the positive electrode active material for the lithium-ion secondary battery and at least one of a lithium-containing compound and a compound including a metal element M other than lithium and nickel, and then obtaining the positive electrode active material by calcinating the mixed powder at 700°C or more and 900°C or less.

At this time, it is preferable to provide a milling process of pulverizing the mixed powder; and a granulation process of, after the milling process, granulating the pulverized mixed powder to form granulated powder and perform the calcination process with respect to the granulated powder.

In addition, the method for manufacturing the positive electrode active material includes a milling process of pulverizing the mixed powder; and a granulation process of, after the milling process, granulating the pulverized mixed powder to form granulated powder. A mixed amount of a lithium-containing compound in the precursor is less than 100 mass%, a remaining mixed amount of the lithium-containing compound is added after the granulation process to form mixed granulated powder, and the calcination process is performed with respect to the mixed granulated powder.

The milling process can include a first milling (coarse milling) process and a second milling process (fine milling process) finer than the first milling process.

A media size adopted in the second milling process is preferably smaller than a media size adopted in the first milling process.

It is preferable that a lithium-containing compound mixed before the oxidation process and a lithium-containing compound added after the granulation process are different compounds, and a melting point of the lithium-containing compound mixed before the oxidation process is higher than a melting point of the lithium-containing compound added after the granulation process.

Moreover, it is preferable that the positive electrode active material for the lithium-ion secondary battery is represented by a composition Formula (1) as follows:

$$Li_{1+a}Ni_bM_{(1-b)}O_{2+\alpha} \cdots \qquad (1),$$

(In Formula (1), M represents a metal element other than Li and Ni, and a, b, and $\alpha$ are numbers satisfying: $-0.1\leq a\leq 0.2$, $0.5\leq b\leq 1.0$, $-0.2\leq\alpha\leq 0.2$.)

Meanwhile, a precursor of a positive electrode active material for a lithium-ion secondary battery of the invention includes: nickel, lithium, and a lithium metal oxide having a peak at 2θ = 43.5° or more and 44.0° or less in X-ray powder diffraction measurement of the precursor. A lithiation rate is 8% or more.

It is preferable that a lithium nickel oxide having a peak at 2θ = 43.5° or more and 44.0° or less in the X-ray powder diffraction measurement of the precursor is provided, and an intensity ratio $I_{LiNiO2}/I_{Ni}$ between a peak intensity $I_{LiNiO2}$ of the peak and a peak intensity $I_{Ni}$ of a peak at 2θ = 44.0° or more and 45.0° or less attributed to metal nickel is 0.5 or more.

In a positive electrode active material for a lithium-ion secondary battery of the invention, remaining lithium hydroxide (LiOH) is 0.6 mol% or less, a porosity is 5 vol% or more and 15 vol% or less, a modal porous diameter is 10 nm or more and 250 nm or less, a particle intensity is 30 MPa, and the positive electrode active material includes nickel and lithium.

An R value calculated based on an intensity $I_{106}$ calculated from an integrated value of a peak identified as a 006 plane, an intensity $I_{102}$ calculated from an integrated value of a peak identified as a 102 plane, and an intensity $I_{101}$ calculated from an integrated value of a peak identified as a 101 plane in X ray diffraction measurement of the positive electrode active material by using a formula as follows is 046 or less:

$$R \text{ value} = (I_{006} + I_{102})/I_{101}.$$

In the following, "oxidation rate indicating the ratio of the amount of oxidized nickel among the total amount of nickel included in the precursor" is simply described as "oxidation rate".

Effects of Invention

According to the production method of the invention, by producing the precursor of the positive electrode active material for the lithium-ion secondary battery by using nickel metal powder, the energy used for transportation and production can be reduced, and the complexity of the production process can be eliminated. As a result, it is possible to provide a precursor of a positive electrode active material for a lithium-ion secondary battery that contributes to the reduction of GHG emissions, the reduction of water resource consumption, and the reduction of waste treatment, and is easy to pulverize, and a method for producing a positive electrode active material for a lithium-ion secondary battery using the precursor. Alternatively, it is possible to provide a precursor that is easy to pulverize, or a positive electrode active material of a positive electrode active material of a lithium-ion secondary battery having stable crystal structure and favorable electrochemical properties.

BRIEF DESCRIPTION OF DRAWINGS

[FIG. 1] FIG. 1 is a flowchart showing an example of a method for producing a precursor of a positive electrode active material for a lithium-ion secondary battery of the invention.

[FIG. 2] FIG. 2 illustrate X-ray diffraction (XRD) patterns of the precursor of the positive electrode active material for the lithium-ion secondary battery according to an embodiment of the invention and a comparative target.

[FIG. 3] FIGs. 3A to 3C are scanning electron microscope (SEM) observation images of nickel metal powder, where FIG. 3A is an image before an oxidation process, FIG. 3B is an image after the oxidation process without lithium carbonate addition, and FIG. 3C is an image after the oxidation process with lithium carbonate addition.

[FIG. 4] FIG. 4 shows a relationship between milling time and particle diameter of the precursor in an example of the method for producing the precursor of the positive electrode active material for the lithium-ion secondary battery of the invention, where FIG. 4A shows changes in milling time and average particle diameter D50 (median particle diameter), and FIG. 4B shows changes in milling time and particle diameter values of a cumulative particle size distribution D95.

[FIG. 5] FIG. 5 is a flowchart showing an example of a method for producing the positive electrode active material for the lithium-ion secondary battery of the invention.

[FIG. 6] FIG. 6 is a flowchart showing an example of a method for producing the positive electrode active material for the lithium-ion secondary battery of the invention.

[FIG. 7] FIG. 7 is a flowchart showing an example of the method for producing the positive electrode active material for the lithium-ion secondary battery of the invention.

[FIG. 8] FIG. 8 is a diagram showing a relationship between R value and oxidation rate of the positive electrode active material.

[FIG. 9] FIG. 9 is a diagram showing a relationship between Ni ratio at the central portion of the positive electrode active material for the lithium-ion secondary battery and D50 of nickel metal powder.

[FIG. 10] FIG. 10 is a diagram showing a relationship between initial discharge capacity and lithiation rate.

[FIG. 11] FIGs. 11A and 11B are diagrams showing a mechanism by which pores are suppressed before and after a granulation process, where FIG. 11A is a schematic diagram in which pre-addition is performed, and FIG. 11B is a schematic diagram by in which post addition is performed.

[FIG. 12] FIGs. 12A to 12C are cross-sectional SEM images of the positive electrode active materials of examples and comparative examples according to the invention, where FIG. 12A shows an SEM image of a positive electrode active material of Example 8, FIG. 12B shows an SEM image of a positive electrode active material of Comparative Example 2, and FIG. 12C shows an SEM image of a positive electrode active material of Comparative Example 3.

[FIG. 13] FIGs. 13A and 13B are cross-sectional SEM images after charge-discharge cycle of positive electrode active materials of examples and comparative examples according to the invention, where FIG. 13A shows Example 8, FIG. 13B shows Comparative Example 2, and FIG. 13C shows Comparative Example 3.

[FIG. 14] FIG. 14 shows an SEM image of the positive electrode active material of Example 13 according to the invention.

DESCRIPTION OF EMBODIMENTS

[Method for producing nickel metal powder]

Before an embodiment of a method for producing a positive electrode active material of the invention, an embodiment of a method for producing nickel metal powder is exemplified.

In the embodiment, the nickel metal powder produced by, for example, the atomization method or carbonyl method can be used. Of course, the nickel metal powder produced by performing the reactive crystallization method or the gas phase reduction method other than the carbonyl method may be used. The atomization method and the carbonyl method are preferable because nickel metal powder with a small amount of impurity elements can be obtained. Also, the atomization method is preferable for obtaining spherical powder. High-purity raw materials are used for battery components for the purpose of avoiding short circuits in batteries. In particular, iron (Fe) is an impurity element that easily causes a short circuit, so the content of Fe of the nickel metal powder is preferably 100 ppm or less by mass ratio. The content of Fe is more preferably 30 ppm or less, and even more preferably 10 ppm or less. Also, a high-purity briquette or a cathode of grade Class I is suitable as a high-purity nickel source. In the present embodiment, high-purity nickel metal powder with few impurities is obtained by producing nickel metal powder by atomization method, carbonyl method, or gas phase reduction method without acid dissolution of these briquettes and cathodes.

The nickel metal powder in the invention refers to powder made of pure nickel metal having a purity of 99 mass% or more, which contains substantially no oxides such as nickel oxide.

Also, as another method for obtaining the nickel metal powder, the carbonyl method is provided. The carbonyl method involves reacting nickel briquettes and the like with a carbon monoxide gas to obtain gaseous nickel carbonyl, and then thermally decomposing the nickel carbonyl under a reduced pressure and a low temperature to obtain nickel metal powder. By using the carbonyl method, high-purity nickel metal powder can also be obtained.

The average particle diameter of the nickel metal powder is preferably in the range of 1 $\mu$m or more and 100 $\mu$m or less. The particle diameter can be measured by using a laser diffraction particle size distribution analyzer. In the specification, D50, which is the particle diameter corresponding to 50% cumulative from the smallest particle size of the volume integration curve obtained from the particle size distribution (volume basis) obtained by the laser diffraction particle size distribution analyzer, is regarded as the average particle diameter. Also, D95 described later is the particle diameter corresponding to 95% cumulative from the smallest size and is obtained from the volume integration curve obtained by the same method. In the method for producing the precursor of the positive electrode active material and the method for producing the positive electrode active material in the present embodiment, the milling process to be described later may be omitted. In this case, the average particle diameter D50 of nickel metal powder is preferably 20 $\mu$m or less, more preferably 8 $\mu$m or less. In the case where the average particle diameter D50 of the nickel metal powder is 20 $\mu$m or less, metal elements other than lithium and nickel diffuse to the center of the nickel metal powder, and the composition inside the positive electrode active material becomes substantially uniform. Furthermore, in the case of D50 of nickel metal powder being 8 $\mu$m or less, the composition inside the positive electrode active material desirably becomes more uniform, which is preferable.

On the other hand, in the case of implementing the milling process, the average particle diameter D50 of the nickel metal powder exceeds 20 $\mu$m with no upper limit, but may be, for example, more than 20 $\mu$m and 100 $\mu$m or less, and milling may be performed after the oxidation process to be described later. The particle diameter of the nickel metal powder can be controlled by an injection pressure of water or gas injected in the atomization method, and can be controlled by a thermal decomposition condition in the carbonyl method. Powder exceeding 100 $\mu$m can be removed through sieve classification and returned (recycled) to dissolution, etc., as a raw material in the method for producing nickel metal powder again.

[Method for producing precursor of positive electrode active material]

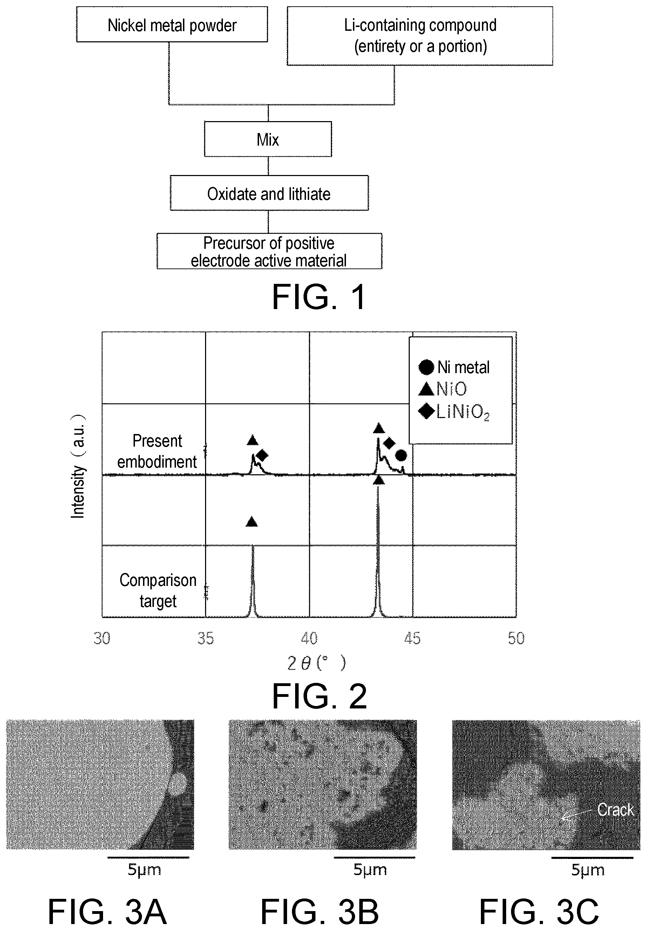

Hereinafter, a method for producing a precursor of a positive electrode active material using the nickel metal powder according to an embodiment of the invention will be described. As shown in the flowchart of FIG. 1, the nickel metal powder and a lithium-containing compound are mixed, and an oxidation process is performed on the mixed powder to perform oxidation and lithiation. The mixed powder may be mixed so as to contain all the amount of lithium element necessary for the positive electrode active material for the lithium-ion secondary battery produced by using the precursor obtained according to the method of the embodiment or may be a very small portion of the amount of the necessary lithium element. In the method for producing the positive electrode active material of the present embodiment described later, the positive electrode active material is obtained by calcination in an atmosphere containing oxygen. Here, by introducing the precursor of the nickel metal powder that has undergone the oxidation process, a positive electrode active material with favorable crystallinity can be produced. At this time, by performing the oxidation process together with a lithium-containing compound, the nickel metal powder, the lithium-containing compound, and oxygen are reacted to form a compound of nickel, lithium, and oxygen (hereinafter referred to as lithiation), and a lithium metal oxide (lithium nickel oxide) is formed, thereby improving pulverizability. In the specification, unless otherwise noted, a lithium metal oxide refers to an oxide containing lithium and a metal element other than lithium (e.g., nickel and the metal element M other than lithium and nickel to be described later), and refers to a lithium metal composite oxide. In addition, a lithium-containing compound (e.g., lithium carbonate, lithium hydroxide) serves as a buffer material, and nickel metal powder particles can be prevented from sintering during the oxidation process. Therefore, the powder state can be maintained even after the oxidation process, and a powder precursor can be obtained. Before the oxidation process, all or some of the compounds containing the metal element M other than lithium and nickel (e.g., Mn, Co, Al, titanium (Ti)) may be mixed.

First, in the invention, as described above, since the nickel metal powder is used as the nickel raw material, the acid dissolution process and the coprecipitation process become unnecessary. It is also calculated that the amount of $CO_2$ emission generated in the production of nickel metal is about 30% less compared to nickel sulfate, and by using the nickel metal powder, the $CO_2$ emission amount, water resource consumption, and waste generated through the production of the precursor and positive electrode active material can be reduced. Furthermore, since the nickel metal powder is used as the nickel raw material, the volume handled in the transportation and the production process of the positive electrode active material can be made smaller than that with regard to compounds such as nickel sulfate and nickel hydroxide. Specifically, when the Ni content rate per unit volume of each compound is expressed in mass%, nickel sulfate ($Ni(SO_4) \cdot 6H_2O$) is 5%, nickel hydroxide ($Ni(OH)_2$) is 29%, whereas the Ni content rate of nickel metal is 100%, and the Ni content rate per unit volume becomes high. As a result, the volume handled in the transportation and the production process of the positive electrode active material is about 1/20 in the present embodiment compared to that with regard to nickel sulfate and about 1/3 compared to that with regard to nickel hydroxide, the fuel consumption during transportation can be suppressed, and the space saving during production and the production efficiency improvement and energy saving due to driving force reduction can be achieved. In addition, at the time of producing the positive electrode active material using the precursor obtained by the method for producing the precursor of the present embodiment, the residual amount of lithium compound after calcination becomes small, and the water washing process for washing away the residual lithium compound from the positive electrode active material performed after producing the positive electrode active material may become unnecessary. The reduction of energy required for drying after water washing as well as water consumption become possible. These are related to the reduction of GHG emission amount, and the positive electrode active material can be produced while suppressing GHG and water consumption. Thus, by using the nickel metal powder as the nickel source, the volume handled in the transportation and the production process of the positive electrode active material can be made smaller, the energy used for transportation and production can be reduced, and the complexity of the production process can be eliminated. As a result, the GHG emission amount accompanying the production of the positive electrode active material and water resource consumption during production can be suppressed, and auxiliary materials and waste treatment become unnecessary. In addition, by causing an oxidation reaction between nickel metal powder and a lithium-containing compound to promote lithiation, milling becomes easy in the milling process performed thereafter. Therefore, the positive electrode active material produced by using the precursor of the present embodiment can bring about good crystallinity.

"Mixing Process"

The lithium-containing compound mixed with the metal nickel powder before the oxidation process may be a single type of lithium compound or a mixture of multiple types of lithium compounds. Also, in the case where a mixture of multiple types of lithium compounds is used, the mass ratio of lithium in the lithium-containing compound may be defined within the range described below. The amount of the lithium-containing compound mixed with the metal nickel powder is preferably 10 mass% or more and less than 100 mass%, when the lithium-containing compound amount necessary for producing the target positive electrode active material is 100 mass%. This is because sintering can be suppressed by the presence of the lithium-containing compound. By mixing 10% or more of the lithium-containing compound with the metal nickel powder, it is easy to exert sintering prevention control between the metal nickel powders. The amount of the lithium-containing compound to be mixed is preferably 50 mass% or less, and more preferably 25 mass% or less. This is because the oxidation processing amount in the oxidation process is reduced, the energy consumed for oxidation processing can be reduced, and the cost and GHG emissions can be reduced. Also, in the case of implementing a milling process during production of the positive electrode active material to be described later, the amount of the lithium-containing compound mixed before the oxidation process is preferably 10 mass% or more and 50 mass% or less. More preferably, the amount of the lithium-containing compound is 25 mass% or less. When the amount of the lithium compound to be mixed decreases, the pores inside the secondary particles of the positive electrode active material decrease. As a result, the particle strength of the positive electrode active material becomes high strength, and the charge-discharge cycle properties become favorable.

Also, by mixing 10 mass% or more of the lithium-containing compound from the lithium-containing compound amount necessary for producing the target positive electrode active material with the metal nickel powder, the lithiation of the metal nickel powder is promoted along with the oxidation by the oxidation process performed thereafter, and the lithium metal oxide (referring to the lithium nickel oxide, but the concurrent notation is omitted hereinafter) is formed in addition to nickel oxide. FIG. 2 shows the observation of the formed material by X-ray powder diffraction (XRD) measurement of the precursor in the case where the lithium nickel oxide obtained by the production method according to the embodiment in which lithium carbonate is mixed (25 mass% mixed against the lithium-containing compound amount necessary for producing the target positive electrode active material) is produced and the case where nickel oxide in the case of oxidation without adding a lithium-containing compound is produced. As a result, in the case where lithium carbonate is mixed, in addition to the peak of nickel oxide, a peak at $2\theta=43.5°$ or more and $44.0°$ or less, which is attributed to lithium nickel oxide, can be confirmed. That is, the formation of lithium nickel oxide is confirmed. Also, FIG. 3 shows SEM images of cross-sectional structures of the metal nickel powder before and after the oxidation process. The cross-sectional structure of the metal nickel powder before the oxidation process is shown in FIG. 3A. Compared with the cross-sectional structure of FIG. 3A, after the oxidation process, in the case where lithium carbonate is added, as shown in FIG. 3B, cavities are scattered inside the metal nickel powder. However, in the case where the oxidation process is performed after lithium carbonate is added, it can be understood that the cross-section of particles after the oxidation process is in a state where cracks have developed overall as shown in FIG. 3C. This can be understood as that the volume expands approximately 3 times when the metal nickel becomes lithium metal oxide, and cracks occur in the precursor due to stress generated together with the volume change. With the cracks developing throughout the powder particles, the precursor becomes easy to pulverize. In addition, in the case where a milling process is implemented, the cracks become diffusion paths for elements, and each element becomes easier to diffuse more uniformly. On the other hand, in the case where milling is implemented in a later process, milling can be performed in a short time due to the cracks.

For the lithium-containing compound, lithium hydroxide, lithium carbonate, etc., can be used. Also, it is preferable that the melting point thereof is higher than the thermal oxidation temperature of the oxidation process. When the melting point of the lithium-containing compound is higher than the thermal oxidation temperature, sintering between the metal nickel powders in the oxidation process can be prevented. Therefore, the lithium-containing compound used in the production method is preferably lithium carbonate. The melting point of lithium carbonate is as high as 724°C, making it possible to raise the thermal oxidation temperature to as high as 720°C. This is because lithium carbonate remains solid even at 720°C and functions as a buffer material to prevent contact and sintering between the metal nickel powders, and the oxidation process can be shortened. Meanwhile, as the lithium-containing compound added after the milling process or after the granulation process during production of the positive electrode active material to be described later, lithium hydroxide may also be used. This is because lithium hydroxide has a melting point as low as 462°C when compared to lithium carbonate and melts at a low temperature, so the reaction with the precursor is considered to occur easily. The lithium-containing compound mixed before the oxidation process and the lithium-containing compound added after the granulation process may be different compounds, and a compound with a high melting point may be selected for the lithium-containing compound mixed before the oxidation process. On the other hand, if the lithium-containing compound mixed before the oxidation process and the lithium-containing compound added after the granulation process are the same, the reaction between the precursor and the lithium-containing compound proceeds uniformly during calcination, so such selection is effective for uniformizing the crystallinity of the positive electrode active material. In addition, the selection is effective for controlling unavoidable impurities in the positive electrode active material. In addition, the average particle diameter of the lithium-containing compound is preferably in the range of 100 nm or more and 100 $\mu$m or less, more preferably in the range of 1 $\mu$m or more and 50 $\mu$m or less.

For mixing the metal nickel powder and the lithium-containing compound, a V-type mixer, a stirring mixer, an attritor, a media mill, and the like are used. To mix uniformly, it is preferable to be able to break up the agglomeration of each raw material powder. For the mixing method, dry mixing that mixes only raw material powders or wet mixing that uses liquid as a dispersion medium may be used. However, considering the subsequent oxidation process, dry mixing is preferable. By using dry mixing, the amount of heat required in the oxidation process can be reduced, which also contributes to GHG reduction in this respect.

"Oxidation Process and Lithiation"

As the oxidation process, oxidizing the mixed powder of the metal nickel powder and the lithium-containing compound by applying heat in an oxygen-containing atmosphere is preferable because the time required for the oxidation process can be shortened. Furthermore, in the case of thermal oxidation, the temperature is preferably about 450°C or higher and 720°C or lower, more preferably 450°C or higher and 700°C or lower. By setting the temperature to 450°C or higher and 700°C or lower, it becomes easier to obtain a precursor with a desired oxidation rate. Also, the heat process time for the oxidation process is preferably 0.5 hours or longer and 20 hours or shorter, more preferably 3 hours or longer and 15 hours or shorter, and even more preferably 5 hours or longer and 10 hours or shorter. By performing the oxidation process in the range of 5 hours or longer and 10 hours or shorter, the oxidation reaction is completed, and it becomes easier to stably obtain a precursor with a desired oxidation rate. At this time, the oxidation rate of the metal nickel powder by the oxidation process is preferably 10% or higher and less than 100%. By setting the oxidation rate to 10% or higher, sintering between metal nickel powders can be prevented in the calcination process for later obtaining the positive electrode active material. Also, by setting the oxidation rate to 10% or higher, the valence of nickel becomes higher, so it can be expected that the reaction to the lithium metal composite oxide is promoted during calcination of the positive electrode active material. On the other hand, to easily obtain favorable crystallinity in the positive electrode active material using the precursor of the embodiment, the oxidation rate may be less than 100%. It is preferable to set the oxidation rate to 95% or lower, or 90% or lower, and setting the oxidation rate to 70% or lower makes it easier to obtain a positive electrode active material with good crystallinity. This is considered to be because producing a positive electrode active material using a precursor with an oxidation rate in the range promotes the formation of layered structure in the calcination process more than using metal nickel powder in which oxidization is excessively performed. On the other hand, by setting the oxidation rate to 50% or higher, the valence of nickel becomes higher and the reaction to lithium metal composite oxide during calcination is further promoted. Furthermore, more preferably, by setting the oxidization rate to 70% or lower, the formation of the layered structure is promoted in the calcination process with respect to the metal nickel powder in which oxidization is excessively performed.

Also, in the oxidation process, it is preferable to perform lithiation of the metal nickel powder to appropriately form and contain lithium metal oxide. This is because forming lithium metal oxide can render the ease of milling. Furthermore, in the calcination process for later obtaining the positive electrode active material, the reaction between the lithium source and the metal source such as nickel is promoted, the crystal formation of the layered structure is promoted, and a positive electrode active material with good crystallinity is obtained. The lithiation rate is preferably 8% or higher to obtain favorable pulverizability, and in the case where the metal nickel powder has an average particle diameter exceeding $20\mu m$, 10% or higher is preferable, preferably 15% or higher, and more preferably 20% or higher. In the oxidation process, when the lithiation rate is excessively increased in the oxidation process, and lithium carbonate is caused to react with metal nickel, and most of lithium carbonate is consumed, the liquid phase component decreases in the calcination process, and the particle growth by liquid phase sintering becomes insufficient. As a result, unreacted lithium increases. That is, the reaction of $MO+Li_2CO_3 \rightarrow LiMO_2$ (M=Ni,Co,Mn, etc.) does not proceed, $Li_2CO_3$ increases, and the formation amount of $LiMO_2$ decreases. Therefore, since impurities that do not function as the positive electrode active material increase, the upper limit of the lithiation rate is set to 35% or lower, preferably 27% or lower, and more preferably 25% or lower, considering obtaining an appropriate liquid phase amount in the calcination process.

Also, for the powder with metal nickel powder having an average particle diameter D50 of $20\mu m$ or less, the milling itself is not essential, so fewer cracks are acceptable. Therefore, the lithiation rate may be less than 8%. With the presence of cracks, the cracks mainly serve as diffusion paths for elements, allowing metal elements to diffuse to the center of the metal nickel powder, resulting in substantially uniform composition within the secondary particles of the positive electrode active material.

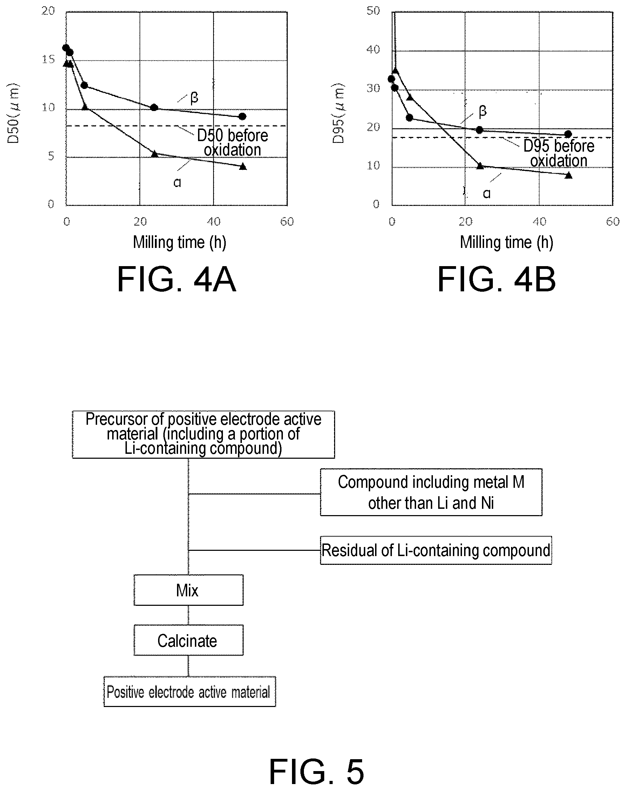

On the other hand, in the case where the metal nickel powder with an average particle diameter D50 exceeding $20\mu m$ is used, the lithiation rate is preferably 10% or more. The precursor after the oxidation process is in a state of being a coarse precursor with a large particle diameter. However, by setting the lithiation rate to 10% or more, the coarse precursor exceeding $20\mu m$ can be pulverized easily and in a short time, and can be used for subsequent production of positive electrode active material. FIG. 4 shows the relationship between milling time and particle diameter according to whether the lithium-containing compound is provided. FIG. 4A shows changes in D50 with the milling time, and FIG. 4B shows changes in D95 with the milling time. In both FIG. 4A and FIG. 4B, a line $\alpha$ shows the transition of D50 particle diameter or D95 particle diameter with the milling time for the precursor with lithium carbonate added, and line $\beta$ shows the transition of D50 particle diameter and D95 particle diameter with milling time for the precursor without lithium carbonate added, respectively. The precursor with lithium carbonate added can be pulverized in a shorter time than the precursors without addition. Regarding D50, without lithium carbonate addition, it takes about 50 hours to reach the D50 before the oxidation process, whereas with addition, it takes about 10 hours to achieve disintegration. Similarly for D95, without addition, it is difficult to reach the D95 before the oxidation process, and although disintegration is possible, the difficulty of milling increases. Thus, without adding lithium-containing compounds (lithium carbonate), it becomes difficult to pulverize a coarse precursor, making it hard to apply a method for producing a positive electrode active material that includes a milling process. Therefore, in the method for producing a positive electrode active material that includes a milling process, lithiation becomes advantageous.

As described above, in the case where the metal nickel powder with an average particle diameter D50 exceeding $20\mu m$ is used, although a milling process is included, by adding and mixing lithium-containing compounds to the metal nickel powder and lithiating the metal nickel powder in the oxidation process, milling becomes easier and the milling time can also be shortened. Note that even in the case of using metal nickel powder with an average particle diameter D50 of $20\mu m$ or less, a milling process may be performed.

The means for determining the oxidation rate and the lithiation rate will be described in the section of Examples.

"Precursor of positive electrode active material"

The precursor of the positive electrode active material of the embodiment has a peak at $2\theta=43.5°$ or more and $44.0°$ or less indicated by the lithium metal oxide in the X-ray powder diffraction measurement of the precursor, and the lithiation rate thereof is 8% or more. That is, it is preferable that the precursor contains lithium metal oxide appropriately. By containing the lithium metal oxide, cracks occur in the powder particles of the precursor, and the pulverizability is improved as described above. Moreover, the reaction between the lithium source and the metal source such as nickel in the calcination process for obtaining the positive electrode active material proceeds, and the formation of the layered structure is promoted. Furthermore, the precursor contains lithium nickel oxide having a peak at $2\theta=43.5°$ or more and $44.0°$ or less in the X-ray powder diffraction measurement, and it is preferable that an intensity ratio $I_{LiNiO2}/I_{Ni}$ between the peak intensity $I_{LiNiO2}$ of the peak and the peak intensity $I_{Ni}$ of the peak at $2\theta=44.0°$ or more and $45.0°$ or less attributed to metal nickel is 0.5 or more. By setting the intensity ratio $I_{LiNiO2}/I_{Ni}$ to 0.5 or more, the metal nickel component that is ductile and difficult to pulverize decreases, and it indicates that lithium nickel oxide that easily causes cracks has been formed, thereby improving pulverizability. Moreover, in the case where the average particle diameter of the metal nickel powder exceeds $20\mu m$, $I_{LiNiO2}/I_{Ni}$ is preferably 5 or more, more preferably 13 or more, and even more preferably 20 or more. Since $I_{LiNiO2}/I_{Ni}$ indicates the formation ratio of lithium nickel oxide, $I_{LiNiO2}/I_{Ni}$ is linked with the lithiation rate, and the upper limit thereof is set to 35 or less, preferably 29 or less, and more preferably 25 or less.

[Method for producing positive electrode active material]

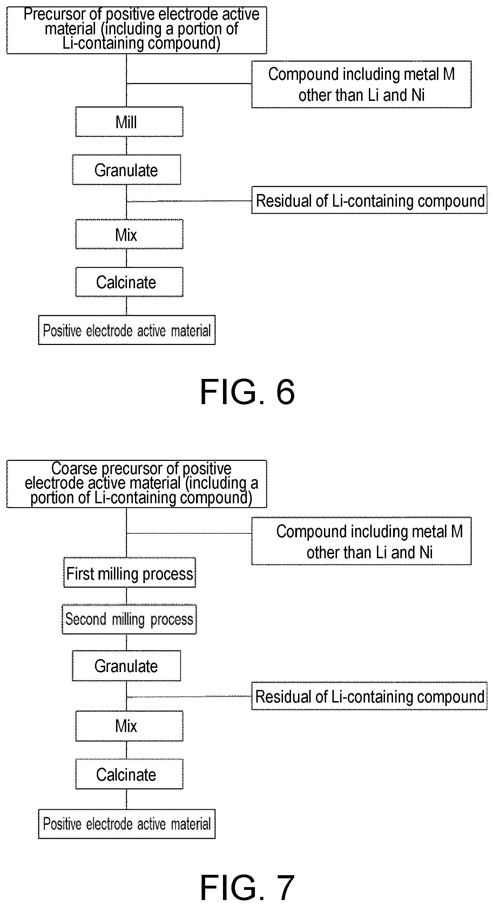

The method for producing the positive electrode active material of the embodiment is characterized by using the precursor of the positive electrode active material. An example of an embodiment of the method for producing the positive electrode active material of the invention is shown in the flowcharts of FIG.5 to FIG.7. As shown in FIG.5, the positive electrode active material may be produced by mixing the precursor, a compound containing a metal element M other than lithium and nickel (hereinafter also referred to as M element compound), and the remaining amount of the lithium-containing compound so as to obtain a positive electrode active material having a target composition, and then calcining the mixture. Moreover, although FIG.5 to FIG.7 include a process of adding the remaining amount of the lithium-containing compound, as shown in FIG.6 and FIG.7, the positive electrode active material may be produced by adding a milling process or a granulation process. FIG.7 includes a first milling process (coarse milling process) and a second milling process (fine milling process). Each embodiment will be described below and explained in detail together with examples.

"Mixing process of precursor, etc."

First, the precursor is prepared by the method for producing the precursor. Since the precursor is oxidized by mixing a lithium-containing compound from the state of nickel metal powder, an appropriate oxidation rate is exhibited. For mixing the precursor with the lithium-containing compound and the M element compound, a V-type mixer, a stirring mixer, a attritor, a media mill, or the like is used. To mix uniformly, it is preferable to be able to break up the agglomeration of each raw material powder. The mixing method may use either a dry method in which only the raw material powder is mixed, or a wet method in which a liquid is mixed as a dispersion medium.

As the lithium-containing compound to be mixed with the precursor, lithium hydroxide, lithium carbonate, and the like can be used. Lithium carbonate is preferable because it has low hygroscopicity and is easy to handle. Also, lithium carbonate is preferable because the amount of $CO_2$ discharged by the production of lithium carbonate is smaller than other lithium-containing compounds such as lithium hydroxide. On the other hand, by using lithium hydroxide, the calcination time is reduced and the productivity is facilitated. Also, the amount of $CO_2$ discharged by calcination is reduced, which is preferable. In the case where the milling process is omitted during the production of the positive electrode active material, it is preferable to use lithium hydroxide. This is because the diffusion of the metal element M other than nickel into the inside of the nickel metal powder is promoted, and a positive electrode active material with uniform composition can be produced. In the precursor production process, the lithium-containing compound mixed with the nickel metal powder before the oxidation process and the lithium-containing compound mixed with the precursor in the mixing process may be different substances or the same substance. Also, the amount of the lithium-containing compound mixed in the process may be the entire amount insufficient for the lithium content required for producing the target positive electrode active material relative to the precursor, or only a portion thereof. For example, when the granulation process is performed before the calcination process to generate a positive electrode active material of secondary particles that are polycrystalline, it is possible to add a lithium-containing compound in the milling process (including the first milling process (coarse milling process) and the second milling process (fine milling process)) to be described later, and it is also possible to add a lithium-containing compound after the granulation process. By adding a lithium-containing compound after the granulation process, it is possible to suppress pores, and it is preferable to additionally perform the addition after the granulation process. On the other hand, in the case where the granulation process is not performed, it is preferable to mix a lithium-containing compound containing a lithium content insufficient for the lithium content required for producing the target positive electrode active material in the mixing process.

"Milling process"

Next, it is preferable to introduce a process of pulverizing and mixing (referred to as milling process) for the purpose of promoting the calcination reaction. This is because a positive electrode active material with high initial discharge capacity and good charge-discharge cycle properties can be obtained. Milling can be performed using an attritor, a media mill, and the like. Since the mixed powder can be pulverized to a submicron size, it is preferable to use a media mill, and it is more preferable to use a beads mill. The D50 of primary particles of the mixed powder after milling (referred to as pulverized mixed powder) is preferably 0.40 $\mu$m or less. The calcination reaction is promoted, and pores in the positive electrode active material are suppressed. As a result, the particle strength of the positive electrode active material becomes high, and the charge-discharge cycle properties become favorable.

Also, in the case of coarse metal nickel powder with an average particle diameter D50 exceeding 20 $\mu$m, it is preferable to perform the milling process in two stages with different milling condition. Specifically, as shown in FIG. 7, the first stage involves coarse milling to less than 10 $\mu$m size (first milling process (coarse milling process)), followed by the second stage of fine milling to submicron size (second milling process (fine milling process)). Also, it is preferable to use a media mill in both the first milling process (coarse milling process) and the second milling process (fine milling process), and it is preferable that the media size of the second milling process (fine milling process) is smaller than the media size of the first milling process (coarse milling process). By pulverizing in two stages, the contamination of media components from the media mill can be suppressed, and a positive electrode active material with desired composition and few impurities can be obtained.

"Granulation process"

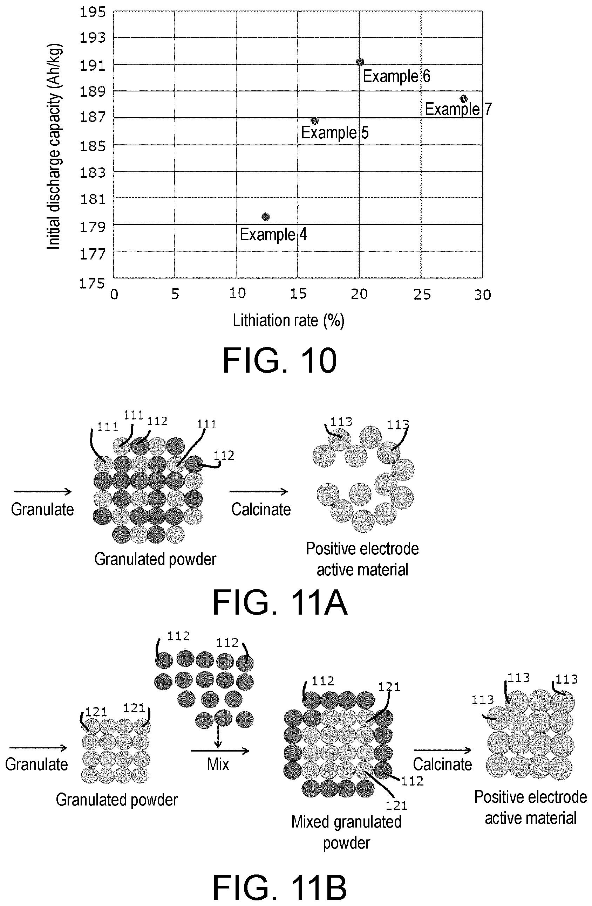

In the process for producing the precursor, in the case where the mixing amount of the lithium-containing compound is less than 100% with respect to the amount of lithium compound necessary for producing the target positive electrode active material, it is preferable to add the remaining amount of the lithium-containing compound after the granulation process (post addition) in the process for producing the positive electrode active material. Here, the effects due to post addition are described with FIG. 11. FIG. 11A is a schematic diagram of granulated powder before and after the calcination process in the case of adding the remaining amount of the lithium-containing compound before the granulation process (pre-addition), and FIG. 11B is a schematic diagram of the granulated powder before and after the calcination process in the case of post-adding the lithium-containing compound. First, in the case of the granulated powder shown in FIG. 11A, the positive electrode active material is obtained by the following process. Initially, the compound containing the M element compound is mixed with respect to the precursor generated from the lithium-containing compound made of a partial amount with respect to the lithium content necessary for the positive electrode active material and the metal nickel powder, and a pulverized slurry is obtained through milling. The lithium-containing compound of an amount insufficient with respect to the lithium content necessary for the positive electrode active material is added and the granulation is done from the pulverized slurry. In the process shown in FIG. 11A, the lithium-containing compound corresponding to the insufficient lithium content with respect to the lithium content of the lithium-containing compound necessary as the positive electrode active material is added before granulation. This is called pre-addition. The case of using a precursor generated from the lithium-containing compound made of the entire amount of lithium content necessary for the positive electrode active material and the metal nickel powder is also referred to pre-addition. When pre-addition is performed in this way, as with the granulated powder shown in FIG. 11A, the granulated powder is configured in a state where particles 111 obtained by mixing the precursor and the M element compound, and a lithium-containing compound 112 are uniformly mixed with each other. Therefore, a large amount of the lithium-containing compound is present inside the granulated powder containing oxidized metal nickel powder. The lithium-containing compound 112 becomes a liquid phase during calcination and diffuses inside the primary particles constituting the granulated powder, so the more lithium-containing compound, the more the pores in the structure after calcination. Therefore, the generated positive electrode active material becomes a structure with many pores between particles 113 formed by oxides made of lithium, nickel and the metal element M, the particle strength of the positive electrode active material decreases, and consequently the charge-discharge cycle properties deteriorate. On the other hand, in the positive electrode active material in the embodiment shown in FIG. 11B, the M element compound is mixed with the precursor generated from the lithium-containing compound made of a partial amount against the lithium content necessary for the positive electrode active material and the metal nickel powder, and granulation is performed by using the pulverized slurry obtained by milling. Then, the lithium-containing compound corresponding to the insufficient lithium content with respect to the lithium content necessary as the positive electrode active material is added after the granulated powder is formed. Adding the lithium-containing compound after the granulated powder is formed in this way is referred to as post addition. In the post addition, since the amount of the lithium-containing compound inside the granulated powder is originally small, particles 121 of the mixed powder obtained by mixing the precursor and the M element compound are close to each other and gaps are unlikely to occur. Furthermore, since the post-added lithium-containing compound 112 is arranged to surround the periphery of particles 121, sufficient penetration into the interior of the granulated powder is performed during calcination. In this way, after calcination, a structure with few pores between particles 113 formed by oxides made of lithium, nickel and the metal element M is obtained. As a result, the particle strength of the positive electrode active material becomes high strength, and the charge-discharge cycle properties become favorable. Therefore, it is preferable to add the remaining amount of the lithium-containing compound after the granulation process (post addition).

"Calcination Process"

Next, the calcination process of calcining the granulated powder, the mixed powder, or the pulverized mixed powder to obtain a positive electrode active material for a lithium-ion secondary battery having a layered structure will be described.

An electric furnace or gas furnace is used for calcination of the mixed powder, pulverized mixed powder, granulated powder, or the like. The calcination atmosphere preferably contains oxygen at 20% or more by volume ratio, and in the case where the Ni content is 80 atomic% or more of all metal elements excluding Li, an oxygen concentration of 90% or more is preferable.

The calcination process may calcine at 700°C or higher and 900°C or lower to obtain a positive electrode active material having a layered structure. At this time, the process may include a preliminary calcination stage held at 450°C or higher and 730°C or lower, and a main calcination stage held at a temperature higher than the calcination temperature in the preliminary calcination stage and at 700°C or higher and 900°C or lower. The preferable calcination temperature and holding time are adjusted according to the composition blended at the time of mixing raw materials, and calcination is performed so that various physical properties (specific surface area, etc.) of the target positive electrode active material after calcination fall within suitable ranges.

As described above, since nickel metal powder is used as a starting material and a lithium-containing compound is mixed and oxidized, the precursor exhibits an appropriate oxidation rate and lithiation rate. Therefore, through the calcination process, an appropriate oxidation rate and lithiation rate are achieved, and it becomes easy to produce the positive electrode active material with a preferable composition ratio as described later.

The synthesized lithium metal composite oxide may be subjected to a washing process of washing with deionized water or the like after the calcination process for the purpose of removing impurities, a drying process of drying the washed lithium metal composite oxide, and the like. The synthesized lithium metal composite oxide may also be subjected to a breaking up process of breaking up the synthesized lithium metal composite oxide, a classification process of classifying the lithium metal composite oxide to a predetermined particle size distribution (particle size), and the like.

Furthermore, in the case of needing to set the particle size distribution of the positive electrode active material generated by using the precursor produced by the method for producing the precursor to a predetermined range, it is preferable to perform the following processes in each of the processes of (mixing process of the precursor, etc.), (milling process), (granulation process), and (calcination process).

First, based on the method for producing a positive electrode active material for lithium-ion secondary battery shown in FIG. 5, the process for achieving a desired particle size distribution of the positive electrode active material will be described. In the mixing process of the precursor and the like, it is preferable to separate the timing of mixing the lithium-containing compound with the precursor and the timing of mixing the M element compound.

For example, as the powder material to be mixed first with the precursor, a powder material made of a substance that is difficult to pulverize is selected, and by milling and mixing, it becomes possible to reduce the powder material having a large particle diameter and perform calcination.

Specifically, it is preferable that the powder material to be mixed first with the precursor is a powder material made of M element compound. At that time, it is preferable to use a V-type mixer, a stirring mixer, an attritor, a media mill, or the like as described above. A stirring mixer, an attritor, or a media mill is preferable because mixing and milling are performed simultaneously. It is further preferable to classify the powder material made of M element compound before mixing the powder material made of M element compound with the precursor, and mix the precursor and the powder material made of M element compound after classification. Of course, it is also preferable to classify the precursor by a similar method before mixing so as to achieve a predetermined particle size distribution range. The classification method is not particularly limited, but known classification methods such as sieve classification and air flow classification using air or the like may be used.

It is also preferable to mix a powder material made of a lithium-containing compound after mixing the precursor and the powder material made of M element compound. In this case, the (mixing) process shown in FIG. 5 corresponds to the process of further mixing a powder material made of a lithium-containing compound in the case of first mixing the powder material made of M element compound with the precursor.

Therefore, in the case of needing to set the generated positive electrode active material to a predetermined particle size distribution range, in the method for producing the positive electrode active material for the lithium-ion secondary battery shown in FIG. 5, it is preferable that the mixing process is divided into at least two or more stages and is performed each time the powder material mixed with the precursor changes.

It is preferable to classify the powder material made of a lithium-containing compound before mixing the powder material made of a lithium-containing compound. Also, in the mixing described herein, it is preferable to use a V-type mixer, a stirring mixer, an attritor, a media mill, or the like as described above because mixing and milling are performed simultaneously. Furthermore, it is preferable to set the particle size distribution of the pre-calcination mixed powder to a predetermined range by classifying in the same manner as described above even after milling and mixing of the powder material made of M element compound and the powder material made of a lithium-containing compound together with the precursor to generate pre-calcination mixed powder. Also, in some cases, it is also possible to perform sieve classification, air flow classification using air, or the like.

It is preferable to perform a process to prevent moisture absorption for the powder material made of M element compound, the powder material made of a lithium-containing compound, and further the precursor, in order to prevent each from agglomerating before mixing with the precursor. For example, it is preferable to store the powder materials in humiditycontrolled containers or storage facilities, such as storing the powder materials in containers pressurized with dry gas until just before being loaded into the mixing device such as a V-type mixer, a stirring mixer, an attritor, a media mill, or the like. Also, it is preferable to pressurize the internal atmosphere of the mixing device with dry gas to prevent external atmosphere from entering.

It should be noted that as the powder material made of a lithium-containing compound, using lithium nitrate instead of the lithium hydroxide and lithium carbonate also makes it easy to adjust the particle size distribution range with respect to the generated positive electrode active material.

Next, after setting the respective particle size distributions of the precursor, the powder material made of M element compound, and the powder material made of a lithium-containing compound to the predetermined distribution ranges, at the time of performing the calcination process, it is preferable to prevent excessive agglomeration of each powder material in the calcination process, or to perform calcination in a state of maintaining a uniform agglomerated state like pellets.

First, the calcination process implemented to prevent excessive agglomeration of each powder material will be described.

It is preferable to place the pre-calcination mixed powder, in which the precursor, the powder material made of M element compound, and the powder material made of a lithium-containing compound are mixed, in a sagger for calcination. Also, it is preferable to deposit the pre-calcination mixed powder in a state containing oxygen gas by allowing the mixed powder to freely fall while sieving once in the atmospheric atmosphere or atmosphere containing oxygen so that oxygen gas is abundantly contained between respective particles of the pre-calcination mixed powder, and to calcine in an electric furnace or a gas furnace for calcination after placing in a dry atmosphere.

Also, it is preferable to form multiple grooves or holes in the pre-calcination mixed powder placed in the sagger for calcination to facilitate the passing of gas containing oxygen to the lower portion of the pre-calcination mixed powder during calcination, thereby promoting the oxidation of the pre-calcination mixed powder at the bottom surface of the sagger for calcination and forming a gas flow path for calcining the pre-calcination mixed powder at the upper part and the bottom surface of the sagger for calcination with little variation.

Also, instead of such a furnace, it is also acceptable to adopt a furnace that performs calcination while tumbling the pre-calcination mixed powder, such as a rotary kiln.

Regardless of which calcination furnace is used, it is preferable to maintain oxygen gas in a richer state than the atmospheric air, more preferably in an atmosphere with oxygen concentration of 90% or more, at a pressure higher than the atmospheric pressure, and to penetrate the gas containing oxygen to the inside of the pre-calcination mixed powder, thereby making the particle size distribution of the positive electrode active material the predetermined distribution state.

Next, the calcination process of performing calcination while maintaining the pre-calcination mixed powder in a uniform agglomerated state will be described.

Before performing the calcination process, it is preferable to apply a pressure to the pre-calcination mixed powder, in which the precursor, the powder material made of M element compound, and the powder material made of a lithium-containing compound are mixed, by a method such as roller press to form a molded body. It is preferable to perform calcination after generating the molded body from the pre-calcination mixed powder in this manner.

Furthermore, before performing the calcination process, pellets of predetermined dimensions and shapes are generated by using the pre-calcination mixed powder in which the precursor, the powder material made of M element compound, and the powder material made of a lithium-containing compound are mixed. Regarding the pellet generation method, it is preferable to pack the material into a mold having an inverted shape of the pellets with the predetermined dimensions and shapes and perform compression molding. In the case of performing wet mixing and milling at the time of mixing the powder material made of a lithium-containing compound with the mixed powder of the precursor and the powder material made of M element compound, pellets having predetermined dimensions and shapes may be generated by performing compression molding in a non-dry state. Furthermore, it is preferable that the pellets are formed into spherical shape by rotational molding or by tumbling cubic press-molded products, or granulated bodies granulated with a spray dryer. Also, it is preferable to match the dimensions to the dimensions of the positive electrode active material to be generated. It is preferable to perform calcination after generating pellets made of the pre-calcination mixed powder in this manner.

At the time of performing the calcination process, in the case of preventing excessive agglomeration of the respective powder materials or performing calcination while maintaining the pre-calcination mixed powder in a pellet-like form and maintaining a uniform agglomerated state, it is preferable to perform calcination at a low temperature within the temperature range. Since lowering the calcination temperature delays the formation of the layered structure, it is preferable to perform calcination for a relatively long time in order to form a sufficient layered structure. Furthermore, by adjusting the oxygen concentration supplied during calcination, it becomes easier to obtain a positive electrode active material having a particle diameter distribution within the predetermined range.

Also, it is preferable to perform a breaking up process during or after the calcination process. The breaking up method here may be either wet breaking up or dry breaking up. During the calcination process, a dry breaking up method is more preferable to easily reach the minimum temperature at which the layered structure is formed as quickly as possible. As the breaking up method, conventional breaking up methods such as a grinder, a beads mill, an attritor, a jet mill, etc., can be used.

Also, to make the particle size distribution of the positive electrode active material within the predetermined range, air classification using the flow of air, etc., may be performed after breaking up. On the other hand, in the case of applying a wet breaking up method after the calcination process, conventional classification methods such as a centrifugal separation method, a sedimentation method, a classification method using a porous membrane, etc., may be used.

By doing so, in the production of the positive electrode active material made of primary particles having precursor particles as the basic configuration without performing the granulation process, it becomes possible to make the particle size distribution of the positive electrode active material within a predetermined range.

The process is also useful for controlling the particle size distribution of the positive electrode active material to be produced in the production of the positive electrode active material formed by polycrystalline secondary particles.

For example, in FIG.6 or FIG.7, regarding the powder material made of the precursor and the M element compound mixed with the precursor, it is preferable to perform the classification process and the process of preventing moisture absorption before mixing in the same manner as described above. Also, it is preferable to perform classification as described above even after the milling process during mixing of the powder material made of the precursor and the M element compound mixed with the precursor.

Also, in the granulation process, while granulated powder is produced from the powder material made of the precursor and M element compound, it is preferable to also perform the classification process on the produced granulated powder. And it is preferable to also perform the classification process on the powder material made of lithium-containing compound and added to the classified granulated powder. Also, it is preferable to similarly perform the classification process on the granulated powder to which the powder material made of lithium-containing compound has adhered. It is preferable to use lithium nitrate instead of lithium hydroxide and lithium carbonate mentioned above for the powder material made of lithium-containing compound to promote particle growth.

Next, it is preferable to perform the classification process on the pre-calcination mixed granulated powder in which the powder material made of the lithium-containing compound and the granulated powder are mixed, in the same manner as described above, to make the particle size distribution range within the predetermined range. Also, the pre-calcination mixed granulated powder may be calcined while performing a process to prevent excessive aggregation as described above, or may be calcined while maintaining a uniform aggregated state such as a pellet form. By performing the classification process between the respective processes shown in FIG.6 or FIG.7 as described above as well as performing milling simultaneously during mixing, it becomes easy to obtain a positive electrode active material with a controlled particle size distribution.

(Composition of positive electrode active material)

Next, the composition of the positive electrode active material of the embodiment will be described. As described above, the composition of the positive electrode active material of the embodiment is not particularly limited, but exemplary compositions are described below. First, the positive electrode active material according to the embodiment is represented by Formula (1) as follows.

$$Li_{1+a}Ni_bM_{(1-b)}O_{2+\alpha} \cdots \qquad (1)$$

(In Formula (1), M is a metal element other than Li and Ni, and a, b, and $\alpha$ are numbers satisfying $-0.1 \leqq a \leqq 0.2$, $0.5 \leqq b \leqq 1.0$, $-0.2 \leqq \alpha \leqq 0.2$.)

The positive electrode active material according to the embodiment can achieve high energy density and high initial discharge capacity by having a composition in which the proportion of Ni per all the metal elements other than Li is 50 atomic% or more. The proportion of Ni per all the metal elements other than Li can take an appropriate value in the range of 50 atomic% or more and 100 atomic% or less. Since the positive electrode active material contains nickel at a high proportion, it is important that the oxidation reaction that oxidizes $Ni^{2+}$ to $Ni^{3+}$ is performed efficiently.

The positive electrode active material according to the embodiment has a more preferred specific composition represented by Formula (2).

$$Li_{1+a}Ni_bCo_cM1_dX_eO_{2+\alpha} \cdots \qquad (2)$$

[In Formula (2), M1 represents at least one selected from Al and Mn, X represents one or more metal elements other than Li, Ni, Co, Al and Mn, and a, b, c, d, e and $\alpha$ are numbers satisfying $-0.1 \leqq a \leqq 0.2$, $0.5 \leqq b \leqq 1.0$, $0 \leqq c \leqq 0.20$, $0 \leqq d \leqq 0.30$, $0 \leqq e \leqq 0.1$, $b+c+d+e=1$, and $-0.2 < \alpha < 0.2$, respectively.]

The positive electrode active material represented by Formula (2) can exhibit a high initial discharge capacity compared to $LiCoO_2$, etc., in a range up to around 4.3V due to the high Ni content. In addition, due to the high Ni content, the positive electrode active material has a lower raw material cost and the raw materials are easier to obtain when compared to $LiCoO_2$ and the like.

Here, the significance of the numerical ranges of a, b, c, d, e and $\alpha$ in Formulas (1) and (2) will be described.

In the formula, a is preferably -0.1 or more and 0.2 or less. a represents the excess or deficiency of lithium from the stoichiometric ratio of the lithium metal composite oxide represented by the general formula: $Li\acute{M}O_2$ ($\acute{M}$ represents metal elements such as Ni, Co, Mn, etc.), that is, $Li:\acute{M}:O=1:1:2$. When the lithium content is excessively low, the initial discharge capacity of the positive electrode active material becomes low. On the other hand, when the lithium content is excessively high, the charge-discharge cycle properties deteriorate. It is preferable to set a within the numerical range to achieve both high initial discharge capacity and favorable charge-discharge cycle properties.

a may be -0.02 or more and 0.07 or less. In the case of a being -0.02 or more, a sufficient lithium content to contribute to charge-discharge is secured, so the initial discharge capacity of the positive electrode active material can be increased. In addition, in the case of a being 0.07 or less, charge compensation by valence change of metal elements is sufficiently achieved, so both high initial discharge capacity and favorable charge-discharge cycle properties can be achieved.

The coefficient b of nickel is preferably 0.50 or more and 1.00 or less. In the case of b being 0.50 or more, a sufficiently high charge-discharge capacity can be obtained compared to the case of using other metal elements. Therefore, it is preferable to set b within the numerical range to produce a positive electrode active material showing high charge-discharge capacity at a lower cost than that of $LiCoO_2$ and the like.

b is preferably 0.80 or more and 0.95 or less, and more preferably 0.85 or more and 0.95 or less. When b is 0.80 or more, a higher initial discharge capacity can be obtained as b becomes larger. In addition, when b is 0.95 or less, a lattice distortion or crystal structure change accompanying lithium-ion insertion and extraction becomes smaller as b becomes smaller, and cation mixing in which nickel is mixed into lithium sites during calcination and deterioration of crystallinity are less likely to occur, so the deterioration of the initial discharge capacity and charge-discharge cycle properties is suppressed.

The coefficient c of cobalt is preferably 0 or more and 0.20 or less. In the case of cobalt being added, effects such as that the crystal structure is stabilized and cation mixing in which nickel is mixed into a lithium site is suppressed can be obtained. Therefore, charge-discharge cycle properties can be improved without significantly impairing charge-discharge capacity. On the other hand, when cobalt is excessive, the raw material cost increases, so the production cost of the positive electrode active material increases. It is preferable to set c within the numerical range to attain favorable productivity, high charge-discharge capacity, and favorable charge-discharge cycle properties.

c may be 0.01 or more and 0.20 or less, 0.03 or more and 0.20 or less, or 0.04 or more and 0.20 or less. In the case of c being 0.01 or more, the larger c is, the more sufficiently the effect of cobalt element substitution can be obtained, and charge-discharge cycle properties are further improved.

The coefficient d of M1 is preferably 0 or more and 0.30 or less. In the case of being substituted with at least one element (M1) selected from the group consisting of manganese and aluminum, the layered structure can be maintained more stably even in the case where lithium is deintercalated by charging. On the other hand, in the case where the element (M1) is excessive, the proportion of other metal elements such as nickel becomes low, and the initial discharge capacity of the positive electrode active material decreases. In the case of d being within the numerical range, the crystal structure of the positive electrode active material can be maintained stably, and favorable charge-discharge cycle properties, thermal stability, and the like can be obtained together with high initial discharge capacity.

As the element represented by M1, manganese is preferable. In the case of being substituted with manganese, a higher initial discharge capacity can be obtained than the case of being substituted with aluminum. In addition, during calcination of the lithium composite oxide, manganese also reacts with lithium carbonate as shown in Formula (3) as follows. Such reaction suppresses coarsening of crystal grains and allows the oxidation reaction of nickel to proceed at a high temperature, so a positive electrode active material showing high charge-discharge capacity can be efficiently obtained.

The at least one element M1 selected from the group consisting of manganese and aluminum may be selected from manganese and aluminum elements. In such case, it is preferable to select manganese as at least one kind and make the molar ratio of manganese larger than other selected elements.

$$Li_2CO_3 + 2M'O + 0.5O_2 \rightarrow 2LiM'\acute{O}_2 + CO_2 \cdots \qquad (3)$$

(In Formula (3), M' represents a metal element such as Ni, Co, Mn, and the like.)

The coefficient d of M1 is preferably 0.02 or more, and more preferably 0.04 or more. The larger the coefficient d of M1 is, the more sufficiently the effect of element substitution with at least one element selected from the group consisting of manganese and aluminum can be obtained. In the case of M1 being manganese, the oxidation reaction of nickel can proceed at a higher temperature, and a positive electrode active material showing a high initial discharge capacity can be obtained more efficiently. In addition, the coefficient d of M1 is preferably 0.18 or less. In the case of the coefficient d of M1 being 0.18 or less, the initial discharge capacity is maintained high even in the case where an element is substituted.

The coefficient e of X is preferably 0 or more and 0.1 or less. X represents one or more metal elements other than Li, Ni, Co, Al, and Mn. In the case of X being at least one element selected from the group consisting of tungsten, magnesium, titanium, zirconium, molybdenum, and niobium, various performance properties can be improved, such as charge-discharge cycle properties can be improved, while the activity of the positive electrode active material is maintained. On the other hand, in the case of the element (X) being excessive, the proportion of other metal elements such as nickel decreases, and the charge-discharge capacity of the positive electrode active material decreases. If e is within the numerical range, a high initial discharge capacity and favorable charge-discharge cycle properties and the like can be achieved simultaneously.

$\alpha$ in Formulas (1) and (2) is preferably -0.2 or more and 0.2 or less. $\alpha$ represents the excess or deficiency amount of oxygen from the stoichiometric ratio of the lithium metal composite oxide represented by the general formula: $LiM'O_2$, that is, Li:M':O=1:1:2. It is preferable that $\alpha$ is within the numerical range to achieve a state with few defects in the crystal structure and obtain high initial discharge capacity and favorable charge-discharge cycle properties.

Next, the powder properties of the positive electrode active material are described. As described above, the powder properties of the positive electrode active material of the embodiment are not particularly limited, but preferable powder properties are described below. In addition, the positive electrode active material may be a polycrystalline positive electrode active material having a structure in which primary particles of several hundred nm aggregate to form secondary particles of several $\mu$m to several tens of $\mu$m, or may be a single crystalline (or single particle) positive electrode active material having a structure in which primary particles of 1 to several $\mu$m are present alone or aggregate in several particles.

The remaining LiOH of the positive electrode active material is preferably 0.60 mol% or less, and more preferably 0.40 mol% or less. By setting the remaining LiOH within the range, the amount of by-product deposited on the positive electrode active material surface (interface) during charge-discharge cycles is reduced, and an increase in interface resistance can be suppressed. As a result, the charge-discharge cycle properties become favorable. Furthermore, the gelation of the positive electrode mixture during positive electrode preparation can be suppressed, and the positive electrode can be easily prepared. In addition, the water washing process after calcination can be omitted. In the case where a lithium carbonate-containing compound is used instead of lithium hydroxide, the remaining $Li_2CO_3$ is preferably 0.60 mol% or less, and more preferably 0.30 mol% or less.

The oil absorption amount of the positive electrode active material is preferably 25 ml/100g or more and 32 ml/100g or less. By setting the oil supply amount to 25 ml/100g or more and 32 ml/100g or less, excessive pores inside the particles of the positive electrode active material are suppressed while the particle strength becomes high. Due to the high strength, the stress caused by the volume change accompanying the charge-discharge cycles can be relieved and cracks can be suppressed from being generated. As a result, favorable cycle properties are obtained. Therefore, in a secondary battery in which a positive electrode material is made of the positive electrode active material of the embodiment, an extended service time can be expected. In addition, by using the positive electrode active material within the range of oil supply, the amount of binder during positive electrode production can be reduced and the positive electrode can be easily produced, which is preferable.

The porosity of the positive electrode active material is preferably 5 vol% or more and 15 vol% or less, and more preferably 5 vol% or more and 12 vol% or less. By adjusting the porosity to the above range through an operation such as post addition after the granulation process as described above, excessive pores inside the particles of the positive electrode active material are suppressed while particle strength becomes high. By setting the pores to 5 vol% or more, the accumulation of stress resulting from by volume change accompanying charge-discharge can be relieved, which is preferable. On the other hand, by setting the porosity to 15 vol% or less, the particle strength becomes high, which is preferable. By setting the porosity to 5 vol% or more and 15 vol% or less, the stress caused by volume change accompanying charge-discharge cycles can be relieved, and since the particle strength is high, cracks can be prevented from being generated, resulting in favorable cycle properties. Therefore, in a secondary battery in which a positive electrode material is made of the positive electrode active material of the embodiment, extended service time can be expected. In addition, by using the positive electrode active material within the porosity range, the amount of binder during positive electrode production can be reduced and the positive electrode can be easily produced, which is preferable.

The modal value of the pore diameter (modal pore diameter) of the positive electrode active material is preferably 10 nm or more and 250 nm or less, and more preferably 10 nm or more and 200 nm or less. By setting the modal value of the pore diameter to the range, the pores inside the positive electrode active material particles become fine and uniform, and as a result, the particle strength becomes high. Consequently, the stress caused by volume change accompanying charge-discharge cycles can be relieved, and since the strength is high, crack generation due to charge-discharge cycles can be suppressed, resulting in good cycle properties.

The particle strength of the positive electrode active material is preferably 30 MPa or more, and more preferably 50 MPa or more. When the particle strength is high within the range, cracks due to charge-discharge cycles can be suppressed from being generated, resulting in favorable cycle properties. On the other hand, the upper limit is not particularly limited, but for example, 300 MPa or less is desirable.

Based on the intensity $I_{006}$ calculated from the integrated value of the peak identified as the 006 plane of the $\alpha$-NaFeO$_2$ type crystal structure ($Li_{1+a}Ni_bCo_cM1_dX_eO_{2+\alpha}$), the intensity $I_{102}$ calculated from the integrated value of the peak identified as the 102 plane, and the intensity $I_{101}$ calculated from the integrated value of the peak identified as the 101 plane in X-ray powder diffraction measurement, it is preferable that the R value calculated by R value = $(I_{006} + I_{102})/I_{101}$ is 0.46 or less.

It is found that the R value depends on the amount of cation mixing in which nickel ions are mixed into lithium sites in the $\alpha$-NaFeO$_2$ type crystal structure. That is, as the R value becomes smaller, the amount of cation mixing decreases and the mixing of nickel ions into lithium sites decreases, allowing Li ions to move smoothly within the lithium sites during charge and discharge. Therefore, the diffusion resistance decreases and the initial discharge capacity increases. Specifically, in the case where the R value is 0.46 or less, cation mixing decreases and a high discharge capacity can be obtained. The upper limit of the R value is preferably 0.45 or less, and more preferably 0.44 or less. On the other hand, the lower limit is preferably 0.42 or more. When the R value is 0.42 or more, the primary particle diameter that affects the capacity retention rate of charge-discharge cycles does not become coarse, and both high capacity and favorable charge-discharge cycle properties can be achieved, which is preferable.

Examples

Hereinafter, the preliminary experiments of the oxidation process will be described, followed by the description of the examples of the method for producing the precursor as well as the precursor, and further followed by the method for producing the positive electrode active material as well as the positive electrode active material. The measurement methods for property values are as follows.

First, the oxidation rate and the lithiation rate can be obtained by the means described below.

(Oxidation rate)

The oxidation rate of the precursor indicates the ratio of the amount of oxidized nickel to the total amount of nickel contained, and is calculated from Formula (4) based on the mass $M_{Ni}$ of the nickel metal powder that is loaded in the oxidation process, the mass $M_i$ of the buffer material components (compounds containing lithium or compounds containing the metal element M), and the mass Mp of the precursor (oxidized powder) after the oxidation process. $M_p-(M_{Ni}+M_i)$ is the mass increase amount of the nickel metal powder due to the oxidation process, and $(M_p-(M_{Ni}+M_i))/M_{Ni}$ is the mass increase rate. The oxidation rate is calculated by dividing the mass increase rate by 0.298, which is the mass increase rate in the case of complete oxidation of the nickel metal powder.

$$\text{Oxidation rate (\%)} = (M_p - (M_{Ni} + M_i))/M_{Ni}/0.298 \times 100 \quad \cdots (4)$$

(Lithiation Rate)

In the specification, the lithiation rate is the ratio of nickel metal that reacts with lithium. In the example, instead of directly determining the ratio of nickel metal powder that reacts with lithium, the carbon content $C_i$ of the raw material mixed powder in which nickel metal powder and lithium carbonate are mixed and the carbon content $C_o$ of the precursor are measured, and the proportion of lithium carbonate that decreases during the oxidation process, that is, reacts with nickel metal, is calculated from Formula (5). Lithium nickel oxide is present as a reaction product. It is known that as lithium nickel oxide increases, cracks are more likely to occur within the precursor. In this regard, the lithiation rate can be used as an indicator of the ease of milling.

$$\text{Proportion of lithium carbonate that reacts with nickel metal } M_{Li} = (C_i - C_o)/C_o \quad \cdots (5)$$

From the molar ratio of nickel metal to lithium carbonate ($M_{Ni/Li}$) in the raw material mixed powder and $M_{Li}$, the ratio of nickel metal that reacted with Li to become lithiated (lithiation rate) was calculated from Formula (6).

$$\text{Lithiation rate} = M_{Ni/Li} \times M_{Li} \quad \cdots (6)$$

(Average particle diameter, particle strength)

The D50 of the primary particles of the pulverized mixed powder and the secondary particles of the calcined powder of the positive electrode active material (particles in which multiple primary particles are aggregated by the granulation process) is measured by a laser diffraction particle size distribution analyzer. The particle strength is measured using a micro compression tester "MCT-510" (produced by Shimadzu Corporation). The particle strength of five positive electrode active material particles having a secondary particle diameter of about 10 $\mu$m is measured, and the average value is taken as particle strength.

(Oil absorption amount)

The oil absorption amount of the powder sample is measured in accordance with JIS K5101-13-1, and NMP (*N*-methylpyrrolidone) is used as the solvent. 5.0 g of powder sample is weighed and placed in a mountain shape on a flat vat. NMP is sucked up with a polyspoit (2 mL capacity) and the mass is measured. Next, while dropping NMP onto the powder sample, kneading is performed with a spatula, and dropping and kneading continues until the powder sample become clay-like overall. In the case of excess NMP, it can be visually confirmed that droplets are not absorbed by the powder sample and remain on the surface, and the amount of NMP dropped up to this point is converted per 100 g of powder sample to obtain the oil absorption amount.

(X-ray diffraction pattern)

The X-ray diffraction (XRD) pattern in X-ray powder diffraction measurement of the precursor and the positive electrode active material is measured using an X-ray diffractometer "X'Pert PRO MPD" (produced by PANalytical) under the conditions of the radiation source CuK$\alpha$, the tube voltage 45 kV, the tube current 40 mA, the sampling interval 0.02°/step, the divergence slit 0.5°, scattering slit 0.5°, the receiving slit 0.15 mm, and the scanning range $15° \leqq 2\theta \leqq 80°$.

(Crystallite size)

Also, the crystallite sizes of nickel oxide, lithium metal oxide (LNO), and metal Ni contained in the precursor are calculated based on Formula (7) by using the analysis software provided alongside the X-ray diffractometer from the half-width $\beta$ of each peak: a peak attributed to nickel oxide at $2\theta=43.3°$ or more and 43.5° or less and the vicinity of such range, a peak attributed to lithium metal oxide (LNO) at $2\theta=43.7°$ to 44.0° and the vicinity of such range, and a peak attributed to metal nickel at $2\theta=44.4°$ to 44.7° and the vicinity of such range, after removing K$\alpha$2 from the XRD pattern obtained by measurement of the precursor.

$$\text{Crystallite size} = K\lambda/\beta\cos\theta \quad \cdots (7)$$

K: shape factor (0.9), $\lambda$: X-ray wavelength (0.154 nm), $\theta$: diffraction angle

(R value)

Furthermore, after removing K$\alpha$2 from the XRD pattern obtained by measurement of the positive electrode active material, the integrated intensities $I_{006}$, $I_{102}$, and $I_{101}$ of each peak of the 006 plane near $2\theta=36°$, the 102 plane near $2\theta=37°$, and the 101 plane near $2\theta=38°$ are measured, and the R values are obtained from Formula (8). It is known that the R value decreases as the layering of the positive electrode active material progresses, such tendency is used as an indicator of good crystallinity. In this regard, a preferable R value is 0.50 or less.

$$\text{R value} = (I_{006}+I_{102})/I_{101} \cdots (8)$$

(Oxidation (Lithiation) Distance)

The cross-section of the precursor is subjected to a line analysis of oxygen element by SEM-EDS, and the distance (depth) from the surface where oxidation and lithiation occur simultaneously is measured. The oxidation (lithiation) distance is measured for 3 particles, and the average value is taken as the oxidation (lithiation) distance.
Also, the value obtained by dividing the oxidation (lithiation) distance by the D50 of the precursor and multiplying by 100 is taken as the oxidation (lithiation) distance rate, and is obtained from Formula (9).

$$\text{Oxidation (lithiation) distance rate} = (\text{oxidation (lithiation) distance})/\text{D50} \times 100 \cdots (9)$$

(Residual lithium content)

0.5 g of the positive electrode active material and 30 ml of pure water are put into a 50 ml plastic container, and after the inside of the plastic container is replaced with argon gas, the mixture is stirred for 1 hour to extract Li components, and an extract solution is obtained by suction filtration. 15 ml of the obtained extract solution is diluted to about 40 ml with pure water and titrated using 0.02M hydrochloric acid to analyze the amounts of the $Li_2CO_3$ component and the LiOH component in the extract solution. An automatic titration apparatus (produced by Hiranuma, COM-1700A) is used for titration. The titration curve has two stages, where the equivalence point (x) of the first stage represents the reactions of Formula (10) and Formula (11), and the equivalence point (y) of the second stage represents the reaction of Formula (11). Since the number of moles of $Li_2CO_3$ in Formula (10) is the same as the number of moles of HCl in Formula (12), the residual $Li_2CO_3$ is taken as the titration amount between the equivalence point of the first stage and the equivalence point (y-x) of the second stage. The residual LiOH is the titration amount up to the equivalence point of the first stage, but since Formula (11) is also included in the titration amount up to the first stage, it is taken as the amount (2x-y) obtained by subtracting Formula (11), that is, residual $Li_2CO_3$. Also, the Li content in residual $Li_2CO_3$ and residual LiOH, that is, the amount of unreacted Li, is calculated. The unreacted Li rate is calculated by dividing the number of moles of unreacted Li by the number of moles of metal elements other than Li contained in the positive electrode active material and multiplying by 100. For the residual LiOH, the number of moles of Li is substituted as the number of moles of unreacted Li, divided by the number of moles of metal elements other than Li contained in the positive electrode active material, and multiplied by 100 to obtain the value (mol%).

$$LiOH+HCl \rightarrow LiCl+H_2O \cdots \qquad (10)$$

$$Li_2CO_3+HCl \rightarrow LiCl+LiHCO_3 \cdots \qquad (11)$$

$$LiHCO_3+HCl \rightarrow LiCl+CO_2+H_2O \cdots \qquad (12)$$

(Ni metal residual degree)

After removing K$\alpha$2 from the XRD pattern obtained by the measurement of the precursor, the metal Ni residual degree is calculated from Formula (13) by using the peak intensity ($I_{NiO}$) of NiO around $2\theta=43.2°$, the peak intensity ($I_{LiNiO2}$) of $LiNiO_2$ around $2\theta=43.6°$, and the peak intensity ($I_{Ni}$) of metal Ni around $2\theta=44.5°$.

$$\text{Ni metal residual degree} = I_{Ni}/(I_{NiO}+I_{LiNiO2}) \cdots (13)$$

(Porosity and modal pore diameter)

The porosity of the positive electrode active material is determined by measuring the volume of pores (pore volume) with pore diameters of 0.6 $\mu$m or less by using mercury intrusion porosimetry with a pore distribution measurement device "AutoPore IV 9520" (produced by Shimadzu Corporation-Micromeritics Corporation), and dividing using the volume of the positive electrode active material. That is:

$$\text{Porosity=pore volume/volume of positive electrode active material} \cdot \cdot \cdot (14)$$

In addition, the pore distribution is measured by using a pore distribution measurement device, and the pore diameter with the highest frequency in the range where the pore diameter is 0.6 $\mu$m or less is defined as the modal pore diameter.

[Oxidation process of metal nickel powder]

[Preliminary Experiment 1]

The metal nickel powder (Ni purity 99.7 mass%, produced by Nippon Atomize Kako) produced by water atomization method with D50 of 8 $\mu$m and lithium carbonate were weighed so that the molar ratio of metal elements Li:Ni became 1.03:0.85. A total amount of 5 kg of the raw material powder was loaded into a V-type mixer with a volume of 45 L and mixed for 90 minutes to obtain raw material mixed powder. Next, the raw material mixed powder was heat-treated at 650°C for 10 hours in a calcination furnace under the atmospheric atmosphere to obtain oxidized powder. Although a portion of the oxidized powder was caked, by breaking up the oxidized powder with a mortar, the oxidized powder corresponding to a precursor with D50 of 8 $\mu$m can be obtained.

[Preliminary Experiment 2]

The same oxidation process as that of Preliminary Experiment 1 was performed, except that metal nickel powder and the lithium carbonate were weighed so that the molar ratio of the metal elements Li:Ni became 0.10:0.85. Although a portion of the oxidized powder was caked, the oxidized powder with D50 of 8 $\mu$m was obtained by breaking up the powder with a mortar. The molar ratio of the metal elements Li:Ni of 0.10:0.85 between the metal nickel powder and the lithium carbonate means that metal nickel powder was mixed with 10 mass% of the lithium-containing compound necessary for production. In Preliminary Experiment 1, 100 mass% of the same lithium-containing compound was mixed.

According to Preliminary Experiment 1 and Preliminary Experiment 2, it is confirmed that oxidation can be performed while preventing sintering of the metal nickel powder by mixing the metal nickel powder with at least a portion of the lithium-containing compounds (lithium carbonate in this case) necessary for production and then performing the oxidation process. This is considered to be because the lithium-containing compounds intervening between the metal nickel powders can prevent contact between metal nickel powders, and as a result, sintering of the metal nickel powder can be prevented.

[Example 1]

As the raw materials, lithium carbonate, metal nickel powder, cobalt carbonate, manganese carbonate, titanium oxide, and aluminum oxide were prepared, and each raw material was weighed so that the molar ratio of the metal elements Li:Ni:Co:Mn:Ti:Al became 0.26:0.85:0.03:0.08:0.03:0.01. Additionally, lithium hydroxide was separately prepared and weighed so that the molar ratio of metal elements, i.e., Li:metal elements other than lithium, became 0.77:1.00. Therefore, the target composition of the positive electrode active material (hereinafter, the loaded composition of the positive electrode active material) was $Li_{1.03}Ni_{0.85}Co_{0.03}Mn_{0.08}Ti_{0.03}Al_{0.01}O_2$. The metal nickel powder used was metal nickel powder with D50 of 8 $\mu$m and Ni purity of 99.7 mass% produced by the water atomization method. Hereinafter, in each example, comparative example, and suggestion example, metal nickel powder with the same nickel purity as this Example 1 is simply described as metal nickel powder. First, the metal nickel powder and the lithium carbonate corresponding to 25 mass% of the amount required according to the molar ratio were loaded into a V-type mixer and mixed for 90 minutes to obtain raw material mixed powder. Next, 100 g of the raw material mixed powder was loaded into a 150 mm square sagger, and the oxidation process was performed by oxidizing at 650°C for 10 hours in the calcination furnace under the atmospheric atmosphere to obtain a precursor containing the metal nickel powder that was partially lithiated. The obtained precursor had a 17% mass increase from the raw material mixed powder. Calculation from the mass increase rate confirms that 68% of the metal nickel powder became nickel oxide. That is, the oxidation rate was 68%.

Additionally, the raw material of the metal element M made of cobalt carbonate, manganese carbonate, titanium oxide, and aluminum oxide were preliminarily pulverized by using a ball mill with Φ5 mm zirconia balls as milling media to obtain preliminarily pulverized powder of the metal element M. The D50 of the preliminarily pulverized powder of the metal element M was 1.2 μm.

Hereinafter, as shown in the flow of FIG. 5, the precursor, the preliminarily pulverized powder of the metal element M, and the lithium hydroxide corresponding to 75 mass% were dry-mixed and preliminarily calcined at 500°C for 20 hours in an oxygen gas flow in a calcination furnace replaced with an oxygen gas atmosphere. Thereafter, main calcination was performed at 840°C for 10 hours in the oxygen gas flow in the calcination furnace replaced with the oxygen gas atmosphere. Thus, a positive electrode active material made of lithium metal composite oxide was obtained.

[Example 2]

A precursor and a positive electrode active material were produced by the same method as Example 1, except that the oxidation process temperature in the oxidation process was 550°C for 10 hours. The oxidation rate of the precursor was 49%.

[Comparative Example 1]

In Comparative Example 1, the raw material of the metal element M was applied as the mixed raw material with metal nickel powder. Metal nickel powder, cobalt carbonate, manganese carbonate, titanium oxide, and aluminum oxide were prepared as the raw materials, and each raw material was weighed so that the molar ratio of the metal elements Ni:Co:Mn:Ti:Al became 0.85:0.03:0.08:0.03:0.01. Additionally, lithium hydroxide was prepared and weighed so that the molar ratio of Li to metal elements other than lithium became 1.03:1.00. For the metal nickel powder, metal nickel powder with D50 of 8 μm produced by the water atomization method was used. Additionally, similar to Example 1, the target composition of the positive electrode active material (hereinafter, the loaded composition of the positive electrode active material) was $Li_{1.03}Ni_{0.85}Co_{0.03}Mn_{0.08}Ti_{0.03}Al_{0.01}O_2$.

First, the raw material of the metal element M made of cobalt carbonate, manganese carbonate, titanium oxide, and aluminum oxide were preliminarily pulverized by using a ball mill with Φ5 mm zirconia balls as milling media to obtain the preliminarily pulverized powder of the metal element M. The D50 of the preliminarily pulverized powder of the metal element M was 1.2 μm. Next, the metal nickel powder and the preliminarily pulverized powder of the metal element M were loaded into a V-type mixer and mixed for 90 minutes to obtain the raw material mixed powder. Next, 50 g of the raw material mixed powder was loaded into a 150 mm square sagger, and the oxidation process was performed at 550°C for 10 hours in a calcination furnace under the atmospheric atmosphere to obtain a precursor containing the metal nickel powder combined with the metal element M. The obtained lithium-free precursor increased in mass by 7.7% compared to the raw material mixed powder. Through calculation according to the mass increase rate, it is confirmed that 62% of the metal nickel powder became nickel oxide. That is, the oxidation rate was 62%.

The precursor and the lithium hydroxide were dry-mixed and preliminarily calcined at 500°C for 20 hours in an oxygen gas flow in a calcination furnace replaced with an oxygen gas atmosphere. Thereafter, main calcination was performed at 840°C for 10 hours in the oxygen gas flow in the calcination furnace replaced with the oxygen gas atmosphere. Thus, a positive electrode active material made of the lithium metal composite oxide was obtained.

Table 1 shows the oxidation rates of the precursors of Examples 1 and 2 and Comparative Example 1. Also, Table 1 (Table 1-1, Table 1-2) shows the crystallite diameters of the nickel oxide contained in the precursors calculated from XRD measurements of the precursors and the positive electrode active materials of Examples 1 and 2 and Comparative Example 1, and the $I_{NiO}$, $I_{LiNiO2}$, $I_{Ni}$, $I_{LiNiO2}/I_{Ni}$, $I_{LiNiO2}/I_{NiO}$, the metal Ni remaining degrees, and the R values of the positive electrode active materials.

Item #1 in Table 1-1 is the average particle diameter D50 of the starting material metal nickel powder, Item #2 in Table 1-1 is the material name mixed with the metal nickel powder before the oxidation process, Item #3 in Table 1-1 is the oxidation temperature (°C) in the oxidation process, Item #4 in Table 1-1 is the total mass (g) of the metal nickel powder introduced into the oxidation process and the material mixed with the metal nickel powder, and Item #5 in Table 1-1 is the oxidation rate of the precursor generated after the oxidation process.

Next, Item #6 in Table 1-2 is the crystallite diameter of the nickel oxide contained in the precursor calculated from XRD measurement results performed on the precursor after the oxidation process, Item #7 in Table 1-2 is the peak intensity ($I_{NiO}$) value of NiO around $2\theta=43.2°$ after removing $K\alpha2$ from the XRD pattern in the precursor of the respective examples and comparative examples, Item #8 in Table 1-2 is the peak intensity ($I_{LiNiO2}$) value of $LiNiO_2$ around $2\theta=43.6°$ after removing $K\alpha2$ from the XRD pattern in the precursor of the respective examples and comparative examples, Item #9 in Table 1-2 is the peak intensity ($I_{Ni}$) value of metal Ni around $2\theta=44.5°$ after removing $K\alpha2$ from the XRD pattern in the precursor of the respective examples and comparative examples, Item #10 in Table 1-2 is the ratio of $I_{LiNiO2}$ value to $I_{Ni}$ value in the precursor of the respective examples and comparative examples, Item #11 in Table 1-2 is the ratio of $I_{LiNiO2}$ value to $I_{NiO}$ value in the precursor of the respective examples and comparative examples, Item #12 in Table 1-2 is the metal Ni remaining degree obtained by Formula (13) in the precursor of the respective examples and comparative examples, and Item #13 in Table 1-2 is the R value in the positive electrode active material of the respective examples and comparative examples.

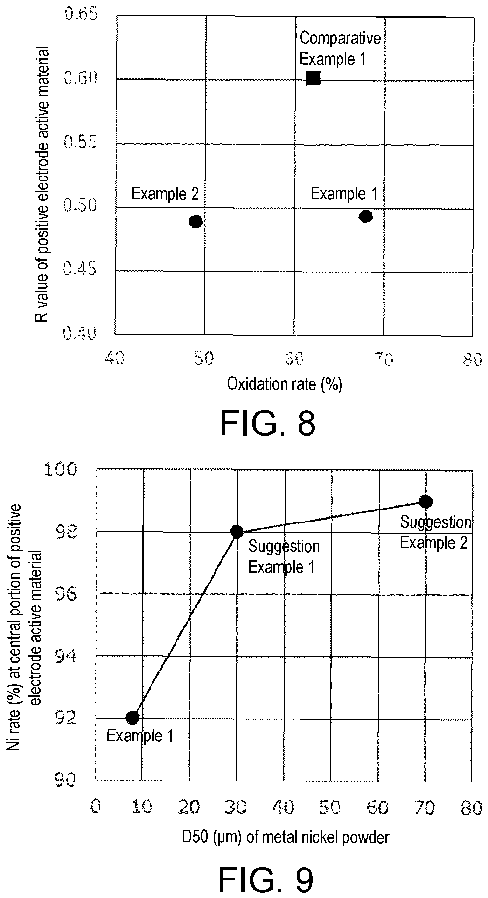

EB1 indicates Example 1, EB2 indicates Example 2, and Rf1 indicates Comparative Example 1. Also, FIG. 8 shows the relationship between the oxidation rate and the R value for Examples 1 and 2 and Comparative Example 1.

[Table 1-1]

| | #1 ($\mu$m) | #2 | #3 (°C) | #4 (g) | #5 (%) |
|---|---|---|---|---|---|
| EB1 | 8 | $Li_2CO_3$ | 650 | 100 | 68 |
| EB2 | 8 | $Li_2CO_3$ | 550 | 100 | 49 |
| Rf1 | 8 | $CoCO_3$, $MnCO_3$, $TiO_2$, $Al_2O_3$ | 550 | 50 | 62 |

[Table 1-2]

| | #6 (nm) | #7 $I_{NiO}$ | #8 $I_{LiNiO2}$ | #9 $I_{Ni}$ |
|---|---|---|---|---|
| EB1 | 36 | 5400 | 10600 | 644 |
| EB2 | 29 | 8000 | 1400 | 19200 |
| Rf1 | 37 | 13000 | 60 | 4600 |
| | #10 $I_{LiNiO2}/I_{Ni}$ | #11 $I_{LiNiO2}/I_{NiO}$ | #12 | #13 |
| EB1 | 16.46 | 1.96 | 0.04 | 0.493 |
| EB2 | 0.07 | 0.18 | 2.04 | 0.489 |
| Rf1 | 0.01 | 0.00 | 0.35 | 0.602 |

From Table 1-1, Table 1-2, and FIG. 8, it is confirmed that Examples 1 and 2 had lower R values than Comparative Example 1, and the positive electrode active materials with favorable crystallinity can be obtained. From Table 1-1 and Table 1-2, the oxidation rates were equivalent for the precursors of Examples 1 and 2 using lithium carbonate as the material to be mixed with the metal nickel powder before the oxidation process, and the precursor of Comparative Example 1 using the raw material of the metal element M made of cobalt carbonate, manganese carbonate, titanium oxide, and aluminum oxide. On the other hand, the peak intensities ($I_{LiNiO2}$) of Examples 1 and 2 were 10600 and 1400, respectively, and the peak intensity ($I_{LiNiO2}$) of $LiNiO_2$ around $2\theta$=43.6° can be confirmed, but no clear peak actually appeared in the comparative example. Although Table 1-2 describes the peak intensity ($I_{LiNiO2}$) of the comparative example, it only presents the numerical value around $2\theta$=43.6°. Also, from $I_{LiNiO2}/I_{Ni}$ in Table 1-2, the precursors of Examples 1 and 2 had lithium metal oxide ($LiNiO_2$) formed in addition to nickel oxide (NiO), but no formation of lithium metal oxide was observed in the precursor of Comparative Example 1. Also, it is confirmed that the positive electrode active materials of Examples 1 and 2 had R values as low as 0.50 or less compared to the positive electrode active material of Comparative Example 1, and positive electrode active materials with favorable crystallinity can be obtained. That is, despite equivalent oxidation rates, when the precursors of Examples 1 and 2 containing lithium metal oxide were used, positive electrode active materials with better crystallinity than that of the precursor of Comparative Example 1 not containing lithium metal oxide can be obtained. From the above, it is found that including lithium metal oxide in the precursor resulted in a positive electrode active material with favorable crystallinity. Also, since generating lithium metal oxide in the precursor requires the use of a lithium-containing compound as the buffer material, it is confirmed that using a lithium-containing compound as the buffer material enabled the production of a positive electrode active material with favorable crystallinity. From the XRD patterns of the precursors after the oxidation process in Examples 1 and 2, it is confirmed that peaks existed between approximately 43.5° and 44.0°, which are $2\theta$ angles attributed to lithium nickel oxide, in addition to the peak of nickel oxide.

Next, the influence of the particle diameter of the metal nickel powder on the electrochemical properties of the positive electrode active material will be described, followed by the description of examples in which the compounds containing lithium are added separately.

[Suggestion Example 1]

A precursor was produced by the same method as Example 1 except that metal nickel powder having a D50 of 30 $\mu$m was used, and subsequently a positive electrode active material was produced by the same method as Example 1.

[Suggestion Example 2]

A precursor was produced by the same method as Example 1 except that metal nickel powder having a D50 of 70 μm was used, and subsequently a positive electrode active material was produced by the same method as Example 1.

XRD of the positive electrode active materials of Suggestion Examples 1 and 2 was measured, and R values were calculated. The results are shown in Table 2. Item I in Table 2 is the average particle diameter D50 (μm) of the metal nickel powder used in Example 1 and each Suggestion Example, Item II in Table 2 is the oxidation rate of the precursor after the oxidation process in which metal nickel powder and lithium carbonate were mixed in the Example and respective suggestion examples, Item III in Table 2 is the R value of the positive electrode active material in Example 1 and each Suggestion Example, and Item IV in Table 2 is the nickel ratio (Ni ratio) at the center part of the particles of the positive electrode active material in Example 1 and each Suggestion Example.
EB1 indicates Example 1, Ex1 indicates Suggestion Example 1, and Ex2 indicates Suggestion Example 2.

Meanwhile, the Ni ratio was measured by scanning electron microscopy-energy dispersive X-ray spectroscopy (SEM-EDX) at the center part of the particle cross-section of the positive electrode active material, and the results are shown in Table 2. Also, the relationship between the D50 of the metal nickel powder and the Ni ratio at the center part of the positive electrode active material is shown in FIG. 9. The results of Example 1 are also shown in Table 2. Based on the above, the influence of the D50 of the metal nickel powder was evaluated.

[Table 2]

|  | I(μm) | II(%) | III | IV(%) |
|---|---|---|---|---|
| EB1 | 8 | 68 | 0.493 | 92 |
| Ex1 | 30 | 41 | 0.580 | 98 |
| Ex2 | 70 | 20 | 0.773 | 99 |

From Table 2 and FIG. 9, in the case where the D50 of the metal nickel powder is 30 μm or more, the R value is high, the crystallinity is low, and the Ni ratio at the center part of the positive electrode active material is high. That is, it can be understood that metal elements other than nickel and lithium hardly diffuse to the center part. On the other hand, as shown in FIG. 9, when the D50 of the metal nickel powder became 20 μm or less, the Ni ratio at the center part of the positive electrode active material became about 95%, and metal elements other than nickel and lithium became easy to diffuse. When metal elements other than lithium further diffuse, the composition of the positive electrode active material become uniform, and the expected electrochemical properties can be obtained with the target composition, which is preferable. From the above, if the D50 of the metal nickel powder is 20 μm or less, it is possible to produce the positive electrode active material by directly using the metal nickel powder as a raw material.

On the other hand, even if the D50 of the metal nickel powder exceeds 20 μm, in the case of containing lithium metal oxide and having a high lithiation rate, it can be pulverized to 20 μm or less in a short milling time (FIG. 4) as described above and used as a raw material. And, similar to the example, metal elements other than nickel and lithium can diffuse to the center part during the process for producing the positive electrode active material, the composition becomes uniform, and the target electrochemical properties can be obtained.

[Example 3]

As raw materials, lithium carbonate, metal nickel powder, cobalt carbonate, manganese carbonate, titanium oxide, and aluminum oxide were prepared, and each raw material was weighed so that the molar ratio of metal elements Li:Ni:Co:Mn:Ti:Al became 1.03:0.85:0.03:0.08:0.03:0.01. For the metal nickel powder, metal nickel powder with D50 of 8 μm produced by the water atomization method was used. Also, similar to Example 1, the target composition of the positive electrode active material (hereinafter, the loaded composition of the positive electrode active material) was $Li_{1.03}Ni_{0.85}Co_{0.03}Mn_{0.08}Ti_{0.03}Al_{0.01}O_2$.

First, lithium carbonate (pre-addition) corresponding to 25 mass% of the amount required according to the molar ratio and metal nickel powder were loaded into a V-type mixer so that lithium and nickel exhibited a molar ratio of Li:Ni of 0.26:0.85, and mixed for 90 minutes to obtain a raw material mixed powder. Next, the raw material mixed powder was subjected to the oxidation process at 650°C for 10 hours in the calcination furnace under the atmospheric atmosphere to obtain a precursor containing oxidized metal nickel powder.

Next, following the flow shown in FIG. 6, the obtained precursor was mixed with the raw material of the metal element M made of cobalt carbonate, manganese carbonate, titanium oxide, and aluminum oxide, and pure water was added thereto so that the solid content ratio became 30 mass%. Then, wet milling was performed with a pulverizer machine to prepare a raw material slurry so that D50 of primary particles would be 0.30 μm (milling process). Subsequently, the obtained raw material slurry was spray-dried with a nozzle-type spray dryer (produced by Okawara Kakohki Co., Ltd., ODL-20 type) to obtain granulated powder with D50 of about 10 $\mu$m (granulation process). The granulated powder and the remaining 75 mass% of lithium carbonate (post addition) were loaded into a V-type mixer and mixed for 90 minutes to obtain mixed granulated powder. In the example, the addition of the lithium-containing compound and the mixing process were performed. Then, the mixed granulated powder was calcined to obtain lithium metal composite oxide (calcination process). Specifically, preliminarily calcination was performed at 700°C for 24 hours in an oxygen gas flow in a calcination furnace replaced with an oxygen gas atmosphere. Thereafter, main calcination was performed at 820°C for 10 hours in the oxygen gas flow in the calcination furnace replaced with the oxygen gas atmosphere to obtain lithium metal composite oxide. The calcined powder obtained by the calcination process was classified using a sieve with a mesh opening of 53 $\mu$m, and the powder under the sieve was used as a positive electrode active material.

Example 3 is an example of mixing the remaining lithium compound amount after the granulation process, in which 25 mass% was mixed before the oxidation process (pre-addition) and 75 mass% was mixed after the granulation process (post addition). The oxidation rate and the lithiation rate of the precursor of Example 3 and the oil absorption amount and particle strength of the positive electrode active material were measured. This is shown in Table 3.

(Preparation of positive electrode)

Next, a lithium-ion secondary battery was fabricated by using the positive electrode active material synthesized in Example 3 as a positive electrode material and metallic lithium as a negative electrode material, and the initial discharge capacity and the capacity retention rate of the lithium-ion secondary battery were measured. First, the prepared positive electrode active material, the carbon-based conductive material, and the binder previously dissolved in N-methyl-2-pyrrolidone (NMP) were mixed at a mass ratio of 92.5:5:2.5. Then, the uniformly mixed positive electrode mixture slurry was applied onto a positive electrode current collector of an aluminum foil with a thickness of 15 $\mu$m so that the coating amount became 13 mg/cm$^2$. Next, the positive electrode mixture slurry applied to the positive electrode current collector was heat-treated at 120°C, and the solvent was distilled off to form a positive electrode mixture layer. Thereafter, the positive electrode mixture layer was pressure-formed through hot-pressing and was punched into a circular shape with a diameter of 15 mm to obtain a positive electrode.

(Initial discharge capacity and charge-discharge cycle properties (capacity retention rate) by half-cell)

Subsequently, a lithium-ion secondary battery was fabricated by using the fabricated positive electrode, the negative electrode, and the separator. As the negative electrode, metallic lithium punched into a circular shape with a diameter of 16 mm was used. As the separator, a porous separator made of polypropylene with a thickness of 30 $\mu$m was used. The positive electrode and the negative electrode were opposed to each other via the separator in a non-aqueous electrolyte solution to assemble the lithium-ion secondary battery. As the non-aqueous electrolyte solution, a solution in which lithium hexafluorophosphate (LiPF$_6$) was dissolved at 1.0 mol/L in a solvent obtained by mixing ethylene carbonate and dimethyl carbonate at a volume ratio of 3:7 was used.

The prepared lithium-ion secondary battery was charged at 38 A/kg based on the mass standard of the positive electrode mixture and at a constant current/constant voltage with an upper limit potential of 4.3 V in an environment of 25°C. Then, the battery was discharged to a lower limit potential of 2.5 V at a constant current of 40 A/kg based on the mass standard of the positive electrode mixture, and the charge capacity and the discharge capacity were measured. Thereafter, the battery was charged at 190 A/kg based on the mass standard of the positive electrode mixture and at a constant current/constant voltage with upper limit potential of 4.3 V. Then, a cycle of discharging to the lower limit potential of 2.5 V at a constant current of 190 A/kg based on the mass standard of the positive electrode mixture was performed for a total of 30 cycles, and the discharge capacity after 30 cycles was measured. The fraction of the discharge capacity after 30 cycles relative to the initial discharge capacity was calculated as the capacity retention rate. The results are also shown in Table 3.

Item A in Table 3 is the average particle diameter D50 ($\mu$m) of the nickel metal powder used in Example 3, Item B in Table 3 is the ratio (mass%) of the amount of lithium carbonate loaded in the mixing process with the nickel metal powder before the oxidation process in Example 3 to the amount of lithium carbonate loaded in the entire process for producing the positive electrode active material, Item C in Table 3 is the ratio (mass%) of the amount of lithium carbonate loaded after the granulation process and before the calcination process in Example 3 to the amount of lithium carbonate loaded in the entire process for producing the positive electrode active material, Item D in Table 3 is the oxidation rate (%) of the precursor after the oxidation process in Example 3, Item E in Table 3 is the lithiation rate of the precursor in Example 3, Item F in Table 3 is the oil absorption amount (ml/100g) per 100g of the positive electrode active material in Example 3, Item G in Table 3 is the average value of the particle strength (MPa) of the positive electrode active material in Example 3, Item H in Table 3 is the initial discharge capacity (Ah/kg) in the lithium-ion secondary battery produced by using the positive electrode active material in Example 3, Item J in Table 3 is the capacity retention rate (%) in the lithium-ion secondary battery produced by using the positive electrode active material in Example 3. Also, EB3 in Table 3 indicates Example 3.

[Table 3]

|  | A(μm) | B(mass%) | C(mass%) | D(%) | E(%) |
|---|---|---|---|---|---|
| EB3 | 8 | 25 | 75 | 68 | 8 |
|  | F(ml/100 g) | G(MPa) | H(Ah/Kg) | J(%) |  |
| EB3 | 30 | 35 | 190 | 91 |  |

From Table 3, it is considered that the positive electrode active material of Example 3 achieved a structure with a reduced amount of lithium carbonate inside the granulated powder, eliminated dispersion of the oxidized nickel metal powder, and fewer pores. In other words, since the amount of lithium carbonate mixed before the oxidation process was small, the oil absorption amount decreased and the pores inside the positive electrode active material decreased, and accordingly, it can be said that the particle strength also became high. Also, as a lithium-ion secondary battery, the initial discharge capacity was as high as 190 Ah/kg. Moreover, the capacity retention rate was also favorable at 90% or more. It is considered that by setting the amount of lithium carbonate mixed before the oxidation process to 50 mass% or less, a positive electrode active material with few pores and high strength was obtained, and by post addition of the remaining amount of lithium carbonate, sufficient penetration of the lithium component was performed, resulting in favorable cycle properties.

Next, a preliminary experiment regarding the milling process for a coarse precursor produced by using nickel metal powder having an average particle diameter D50 exceeding 20 μm will be described, and then examples will be described.

[Preliminary Experiment 3] For the coarse precursor of Suggestion Example 2, carbon content measurement and cross-sectional SEM observation were performed, and the lithiation rate, the oil absorption amount, and the oxidation (lithiation) distance were calculated. The results are shown in Table 4 (Table 4-1, Table 4-2).

Next, the coarse precursor of Suggestion Example 2 was mixed with the raw material of the metal element M made of cobalt carbonate, manganese carbonate, titanium oxide, and aluminum oxide, and 200 g of such mixed powder was placed in a plastic pot container, 200 g of pure water and 200 g of zirconia balls (produced by Nikkato) with a ball diameter of 5 mm as the medium were added, and milling was performed at a rotation speed of 90 rpm for 64 hours to obtain a pulverized slurry (first milling process (coarse milling process)). The D50 after coarse milling was 2.9 μm, and D95 was 10.1 μm.

Next, to finely pulverize the obtained pulverized slurry, wet milling was performed with a pulverizer machine, but fine milling cannot be achieved. The reason for this will be described later.

[Example 4]

As raw materials, lithium carbonate, nickel metal powder, cobalt carbonate, manganese carbonate, titanium oxide, and aluminum oxide were prepared, and each raw material was weighed so that the molar ratio of metal elements Li:Ni:Co:Mn:Ti:Al became 1.03:0.85:0.03:0.08:0.03:0.01. Similar to Example 1, the target composition of the positive electrode active material (hereinafter, the loaded composition of the positive electrode active material) was $Li_{1.03}Ni_{0.85}Co_{0.03}Mn_{0.08}Ti_{0.03}Al_{0.01}O_2$. For the nickel metal powder, the nickel metal powder having D50 of 70 μm and D95 of 176 μm was used. Nickel metal powder and Lithium carbonate corresponding to 25 mass% of the amount required according to the molar ratio were loaded into a V-type mixer so that lithium and nickel exhibited a molar ratio Li:Ni of 0.26:0.85. Mixing was performed for 120 minutes to obtain a raw material mixed powder. Next, the raw material mixed powder was oxidized by performing the oxidation process at 700°C for 4 hours in a calcination furnace under atmospheric atmosphere to obtain a coarse precursor containing nickel metal powder partially lithiated. The oxidation rate was 69%. In addition, carbon content measurement, cross-sectional SEM observation, and XRD measurement were performed on the coarse precursor, and the lithiation rate, the oil absorption amount, oxidation (lithiation) distance, oxidation (lithiation) distance rate, $I_{LiNiO2}/I_{Ni}$, and $I_{LiNiO2}/I_{NiO}$ were calculated. The results are shown in Table 4-1 and Table 4-2. In Example 4 as well, from the XRD pattern for the precursor after the oxidation process, in addition to the peak of nickel oxide, a peak can be confirmed between approximately 43.5° and 44.0°, which is the 2θ angle attributed to lithium nickel oxide.

Next, following the flow shown in FIG. 7, the obtained coarse precursor was mixed with the raw material of the metal element M made of cobalt carbonate, manganese carbonate, titanium oxide, and aluminum oxide, and 200 g of the mixed powder was placed in a plastic pot container, 200 g of pure water and 200 g of zirconia balls (produced by Nikkato) with a ball diameter of 5 mm as media were added, and milling was performed at a rotation speed of 90 rpm for 64 hours to obtain a pulverized slurry (first milling process (coarse milling process)). The particle size distribution after coarse milling was measured. The results are shown in Table 4-2.

Next, to finely pulverize the obtained pulverized slurry, wet milling was performed with a pulverizer machine, and a raw material slurry was prepared so that D50 became 0.3 μm (second milling process (fine milling process)). The particle size distribution after fine milling is shown in Table 4-2. Subsequently, the obtained raw material slurry was spray-dried with a nozzle-type spray dryer (produced by Okawara Kakohki Co., Ltd., ODL-20 type) to obtain granulated powder with D50 of about 10 $\mu$m (granulation process). Then, the dried granulated powder and lithium carbonate corresponding to 75 mass% of the amount required according to the molar ratio so that lithium and nickel exhibited a molar ratio of Li:Ni of 1.03:0.85 were loaded into a V-type mixer to obtain mixed granulated powder. The obtained mixed granulated powder was calcined to obtain a lithium metal composite oxide (calcination process). Specifically, preliminary calcination was performed at 700°C for 24 hours in an oxygen gas flow in a calcination furnace replaced with an oxygen gas atmosphere. Thereafter, main calcination was performed at 820°C for 10 hours in the oxygen gas flow in the calcination furnace replaced with the oxygen gas atmosphere to obtain a lithium metal composite oxide. The calcined powder obtained by the calcination process was classified by using a sieve with a mesh opening of 53 $\mu$m, and the powder under the sieve was used as the positive electrode active material.

[Examples 5 to 7]

Coarse precursors were obtained by the same method as Example 4 except that the oxidation process time in the oxidation process was changed to 8 hours in Example 5, 10 hours in Example 6, and 30 hours in Example 7, and positive electrode active materials were produced through the same method. In all examples, similar to Example 1, the target composition of the positive electrode active material (hereinafter, the loaded composition of the positive electrode active material) was $Li_{1.03}Ni_{0.85}Co_{0.03}Mn_{0.08}Ti_{0.03}Al_{0.01}O_2$. For the coarse precursors, oxidation rates, lithiation rates, oil absorption amounts, oxidation (lithiation) distances, oxidation (lithiation) distance rates, $I_{LiNiO2}/I_{Ni}$, $I_{LiNiO2}/I_{NiO}$ derived from XRD measurement results, metal Ni residual degrees, etc., were similarly calculated. Also, particle size distributions after coarse milling and after fine milling were measured. The results are shown in Table 4 (Table 4-1, Table 4-2). In all of Examples 5 to 7, from the XRD patterns for the precursors after the oxidation process, in addition to the peaks of nickel oxide, peaks can be confirmed between approximately 43.5° and 44.0°, which are 2$\theta$ angles attributed to lithium nickel oxide.

Next, to investigate the influence of the powder properties of the precursor on the powder properties and electrochemical properties of the positive electrode active material, the remaining LiOH, the remaining $Li_2CO_3$, the unreacted Li rates, the specific surface areas, the oil absorptions, and the R values of the positive electrode active materials obtained in Examples 4 to 7 were determined. The results are shown in Table 5. Also, by the same method as Example 3, positive electrodes and lithium-ion secondary batteries were produced, initial discharge capacities were measured, and evaluations of coulombic efficiency and charge-discharge cycle properties (capacity retention rates) were performed. The results are shown in Table 5. Coulombic efficiency is a battery property expressed as discharge capacity/charge capacity, and shows the proportion of Li ions that can return to the positive electrode material through discharging among the Li ions desorbed in the initial charge. The higher the value, the better the properties.

In Table 4-1, Item A1 shows the average particle diameter D50 ($\mu$m) of the metal nickel powder used in the production of the precursors for Suggestion Example 2 and Examples 4 to 7, Item B1 in Table 4-1 shows the oxidation process temperature (°C) in the oxidation process performed after mixing the metal nickel powder and lithium carbonate for Suggestion Example 2 and Examples 4 to 7, Item C1 in Table 4-1 shows the oxidation process time (hours) of the oxidation process for Suggestion Example 2 and Examples 4 to 7, and Item D1 in Table 4-1 shows the ratio (weight%) of the lithium carbonate amount loaded in the mixing process with the metal nickel powder before the oxidation process for Suggestion Example 2 and Examples 4 to 7 to the lithium carbonate amount added in the entire process for producing the positive electrode active material, respectively.

Furthermore, Item E1 in Table 4-1 shows the oxidation rate (%) of the precursors for Suggestion Example 2 and Examples 4 to 7, Item F1 in Table 4-1 shows the lithiation rate (%) of the precursor, Item G1 in Table 4-1 shows the oil absorption amount per 100g of the precursor (ml/100g), Item H1 in Table 4-1 shows the oxidation (lithiation) distance ($\mu$m) of the precursor, and Item J1 in Table 4-1 shows the oxidation distance rate (%) of the precursor.

On the other hand, Item A2 in Table 4-2 shows the peak intensity ($I_{Ni}$) values of metal Ni after removing K$\alpha$2 from the XRD pattern in the precursor for Suggestion Example 2 and Examples 4 to 7, Item B2 in Table 4-2 shows the peak intensity ($I_{LiNiO2}$) value of $LiNiO_2$ after removing K$\alpha$2 from the XRD pattern in the precursors, Item C2 in Table 4-2 shows the peak intensity ($I_{NiO}$) value of NiO after removing K$\alpha$2 from the XRD pattern in the precursor, Item D2 in Table 4-2 shows the ratio value of $I_{LiNiO2}$ value and $I_{Ni}$ value in the precursor, Item E2 in Table 4-2 shows the ratio value of $I_{LiNiO2}$ values and $I_{NiO}$ value in the precursor, Item F2 in Table 4-2 shows the metal Ni residual degree of the precursor obtained based on Formula (13), Item G2 in Table 4-2 shows the crystallite diameter (nm) of the nickel oxide phase contained in the precursor calculated from the XRD measurement results, Item H2 in Table 4-2 shows the crystallite diameter (nm) of the $LiNiO_2$ phase contained in the precursor calculated from the XRD measurement result, and Item J2 in Table 4-2 shows the crystallite diameter (nm) of the metal Ni phase contained in the precursor calculated from the XRD measurement results. Then, Item K2 in Table 4-2 shows particle diameters D 50 ($\mu$m) of the precursors for Suggestion Example 2 and Example 4 to 7 after the first milling process (course milling process). Item L2 in Table 4-2 shows particle diameters D95 ($\mu$m) at which

the cumulative particle size distribution of the precursor after implementing the first milling (course milling process) from the smallest size reaches 95%, based on Suggestion Example 2 and Examples 4 to 7. Item M2 in Table 4-2 shows particle diameters D 50 (μm) of the precursors for Suggestion Example 2 and Example 4 to 7 after the first milling process (course milling process) and the second milling process (fine milling process). Item N2 in Table 4-2 shows particle diameters D95 (μm) at which the cumulative particle size distribution of the precursor after implementing the first milling process (course milling process) and the second milling process (fine milling process) from the smallest size reaches 95%, based on Suggestion Example 2 and Examples 4 to 7.

Next, Item A3 in Table 5 shows the remaining LiOH amount obtained from the positive electrode active material for Examples 4 to 7 by a titration apparatus, Item B3 in Table 5 shows the remaining $Li_2CO_3$ amount obtained from the positive electrode active material for Examples 4 to 7 by a titration apparatus, and Item C3 in Table 5 shows the ratio (%) of the number of moles of unreacted Li contained in the positive electrode active material for Examples 4 to 7 to the number of moles of metal elements other than Li contained in the respective positive electrode active material for Examples 4 to 7. Also, Item D3 in Table 5 shows the specific surface area (m²/g) of the positive electrode active material for Examples 4 to 7, Item E3 in Table 5 shows the oil absorption amounts (ml/100g) per 100g of the positive electrode active material for Examples 4 to 7, and Item F3 in Table 5 shows the R value of the positive electrode active material for Examples 4 to 7. And Item G3 in Table 5 shows the initial charge capacity (Ah/kg) in the lithium-ion secondary batteries produced using the positive electrode active material for Examples 4 to 7, Item H3 in Table 5 shows the initial discharge capacity (Ah/kg) for the lithium-ion secondary batteries, Item J3 in Table 5 shows the coulombic efficiency (%) for the lithium-ion secondary batteries, and Item K3 in Table 5 shows the capacity retention rates (%) for the lithium-ion secondary batteries. In Tables 4-1, 4-2, and 5, EB4 is Example 4, EB5 is Example 5, EB6 is Example 6, EB7 is Example 7, and Ex2 is Suggestion Example 2.

[Table 4-1]

|  | A1 (μm) | B1 (°C) | C1 (h) | D1 (%) | E1 (%) |
|---|---|---|---|---|---|
| Ex2 | 70 | 650 | 10 | 25 | 20 |
| EB4 | 70 | 700 | 4 | 25 | 69 |
| EB5 | 70 | 700 | 8 | 25 | 67 |
| EB6 | 70 | 700 | 10 | 25 | 66 |
| EB7 | 70 | 700 | 30 | 25 | 65 |
|  | F1 (%) | G1 (ml/100 g) | H1 (μm) | J1 (%) |  |
| Ex2 | 7 | 8 | 7.5 | 11 |  |
| EB4 | 12 | 16 | 15 | 22 |  |
| EB5 | 16 | 17 | - | - |  |
| EB6 | 20 | 18 | 35 | 50 |  |
| EB7 | 28 | 17 | - | - |  |

[Table 4-2]

|  | A2 $I_{Ni}$ | **B2** $I_{LiNiO2}$ | C2 $I_{NiO}$ | D2 $I_{LiNiO2}/I_{Ni}$ | E2 $I_{LiNiO2}/I_{NiO}$ | F2 |  |
|---|---|---|---|---|---|---|---|
| Ex2 | - | - | - | - | - | - |  |
| EB4 | 3446 | 1203 | 264 | 5 | 0.35 | 0.06 |  |
| EB5 | 2712 | 1907 | 146 | 13 | 0.70 | 0.03 |  |
| EB6 | 3049 | 2492 | 123 | 20 | 0.82 | 0.02 |  |
| EB7 | 1431 | 3321 | 110 | 30 | 2.32 | 0.02 |  |
|  | G2 (nm) | H2 (nm) | J2 (nm) | K2 (μm) | L2 (μm) | M2 (μm) | N2 (μm) |
| Ex2 | - | - | - | 2.9 | 10.1 | - | - |
| EB4 | 125 | 24 | 164 | 1.2 | 2.7 | 0.26 | 0.45 |
| EB5 | 103 | 27 | 142 | 1.3 | 3.0 | 0.28 | 0.49 |
| EB6 | 134 | 29 | 111 | 1.3 | 2.4 | 0.28 | 0.45 |

(continued)

|  | G2 (nm) | H2 (nm) | J2 (nm) | K2 ($\mu$m) | L2 ($\mu$m) | M2 ($\mu$m) | N2 ($\mu$m) |
|---|---|---|---|---|---|---|---|
| EB7 | 166 | 30 | 60 | 1.5 | 3.0 | 0.29 | 0.50 |

[Table 5]

|  | A3 | B3 | C3 (%) | D3 ($m^2$/g) | E3 (ml/100 g) |
|---|---|---|---|---|---|
| EB4 | 1.30 | 1.34 | 9 | 0.18 | 36 |
| EB5 | 0.32 | 0.13 | 5 | 0.77 | 32 |
| EB6 | 0.37 | 0.25 | 2 | 0.87 | 27 |
| EB7 | 0.40 | 0.56 | 3 | 0.79 | 28 |
|  | F3 | G3 (Ah/kg) | H3 (Ah/kg) | J3 (%) | K3 (%) |
| EB4 | 0.41 | 217 | 180 | 82.9 | 87 |
| EB5 | 0.45 | 220 | 187 | 84.8 | 91 |
| EB6 | 0.45 | 223 | 191 | 85.9 | 91 |
| EB7 | 0.43 | 219 | 188 | 86.1 | 90 |

From Table 4-1, as in Examples 4 to 7, even in the case where the metal nickel powder having a D50 of 70 $\mu$m was used, the precursors with an oxidation rate of 65% or more were obtained while sintering was prevented by lithium carbonate mixed (pre-addition) before the oxidation process. Also, it is found that the lithiation rate increased as the oxidation process time increased, the unreacted Li rate decreased, the reaction between the lithium source and metal sources such as nickel progressed, and the formation of lithium metal oxide progressed. The lithiation rate can be used as an index of ease of milling, but it can be said that as the lithiation rate increased, the amount of lithium metal oxide inside the precursor increased, and cracks were likely to occur inside the precursor due to the volume expansion. Also, in the precursors of Examples 4 to 7 where the lithiation rate became 12% or more, the oil absorption amount of the precursors became 16 ml/100g to 18 ml/100g, which considerably increased from 8 ml/100g of Suggestion Example 2 having a lithiation rate of 7%. This also shows that cracks inside the precursors increased. As a result, in Examples 4 to 7, D95 after coarse milling became 3 $\mu$m or less, and fine milling also became possible. On the other hand, the lithiation rate of Suggestion Example 2 was low at less than 10%, and it is considered that fine milling was not possible because the few number of cracks. Therefore, it can be said that when the average particle diameter of the metal nickel powder exceeds 20 $\mu$m, it is necessary to make the lithiation rate of the precursor 10% or more.

Also, from Table 5, as the positive electrode active material, the higher the lithiation rate of the precursor, the more the unreacted Li rate of the positive electrode active material decreased, and the positive electrode active materials with favorable crystallinity having R values of 0.50 or less were obtained, and favorable results were obtained for initial discharge capacity, coulombic efficiency, and capacity retention rate. FIG. 10 shows the relationship between lithiation rate and initial discharge capacity. It can be seen that the higher the lithiation rate, the higher the initial discharge capacity. At this time, the higher the lithiation rate, the more the unreacted Li rate contained in the positive electrode active material decreased, indicating that there were few unreacted impurities, and it can be said that the higher the lithiation rate, the more the unreacted impurities decrease. From such a viewpoint, it can also be said that the initial discharge capacity becomes higher. In Example 7, the initial discharge capacity decreased slightly, but the cause is considered to be that lithiation progressed excessively before the calcination process and lithium carbonate was consumed, thus making the liquid phase component decrease in the calcination process and the reaction of lithium metal oxidation difficult to proceed. From such considerations, it can be said that by making the lithiation rate of the precursor 10% or more, preferably 15% or more, the reaction of Li+M+$O_2$→$LiMO_2$ (M=Ni, Co, Mn, etc.) is promoted, and electrochemical properties such as initial discharge capacity are also improved.

Also, in the precursors of Examples 4 to 7, the intensity ratio $I_{LiNiO2}$/$I_{Ni}$ of the peak intensity $I_{LiNiO2}$ of lithium nickel oxide and the peak intensity $I_{Ni}$ of nickel metal is shown as $I_{LiNiO2}$/$I_{Ni}$ in Table 4, indicating sufficiently large numerical values of 5 to 30. Therefore, sufficient cracks were formed in the precursors, resulting in high pulverizability. Actually, D95 in the first milling process (coarse milling process) was pulverized to 3.0 $\mu$m or less, and in the second milling process (fine milling process), D95 can be finely pulverized to 0.5 $\mu$m or less. Therefore, it is possible to produce a positive electrode and a lithium-ion secondary battery.

From the above results, it is found that by appropriately reacting the nickel metal powder with a portion of Li in the oxidation process in the production of the precursor, lithiation is promoted, the crystal structure is stabilized, and a lithium-ion secondary battery with favorable electrochemical properties can be obtained.

Next, to investigate the influence of the method for producing the positive electrode active material of the invention on the powder properties and electrochemical properties of the positive electrode active material, the positive electrode active materials were produced according to Example 8 and Comparative Examples 2 and 3, and the residual Li contents, particle strengths, porosities, and modal porosities were measured.

[Example 8]

A positive electrode active material was produced by the same method as Example 6, except that the temperature of main calcination was set to 840°C. As in Example 1, the target composition of the positive electrode active material (hereinafter, the loaded composition of the positive electrode active material) was $Li_{1.03}Ni_{0.85}Co_{0.03}Mn_{0.08}Ti_{0.03}Al_{0.01}O_2$.

[Comparative Example 2]

First, lithium carbonate, nickel hydroxide, cobalt carbonate, manganese carbonate, titanium oxide, and aluminum oxide were prepared as raw materials, and each raw material was weighed so that the molar ratio of metal elements Li:Ni:Co:Mn:Ti:Al became 1.03:0.85:0.03:0.08:0.03:0.01, and pure water was added so that the solid content ratio became 30 mass%. Then, wet milling (wet mixing) was performed with a pulverizer machine to prepare a raw material slurry so that the average particle diameter would be less than 0.2 $\mu$m. The comparative example differs from the examples in that nickel hydroxide was used as a raw material. Also, as in Example 1, the target composition of the positive electrode active material was $Li_{1.03}Ni_{0.85}Co_{0.03}Mn_{0.08}Ti_{0.03}Al_{0.01}O_2$.

Subsequently, the obtained raw material slurry was spray-dried with a nozzle-type spray dryer to obtain granulated powder with D50 of about 12 $\mu$m. Then, the granulated powder was subjected to a dehydration process at 400°C for 5 hours under atmospheric atmosphere by using a continuous conveying furnace. Thereafter, a heat process was performed at 650°C for 22 hours in an oxygen gas flow using a calcination furnace replaced with an oxygen gas atmosphere, and further preliminary calcination was performed at 700°C for 30 hours. After that, main calcination was performed at 840°C for 10 hours in the oxygen gas flow using the calcination furnace replaced with oxygen gas atmosphere, and further a heat process was performed at 740°C for 4 hours in the oxygen gas flow by using the calcination furnace replaced with oxygen gas atmosphere. In this way, in the case where nickel hydroxide was used as a raw material, a heat processing process was performed to eliminate the adhesion of the raw material powder in the calcination furnace and to adjust the structure. Then, the calcined powder after calcination was classified by using a sieve with a mesh opening of 53 $\mu$m, and the powder under the sieve was used as the positive electrode active material.

[Comparative Example 3]

A positive electrode active material was produced by the same method as Comparative Example 2, except that the temperature of main calcination was set to 820°C. Also, as in Example 1, the target composition of the positive electrode active material was $Li_{1.03}Ni_{0.85}Co_{0.03}Mn_{0.08}Ti_{0.03}Al_{0.01}O_2$.

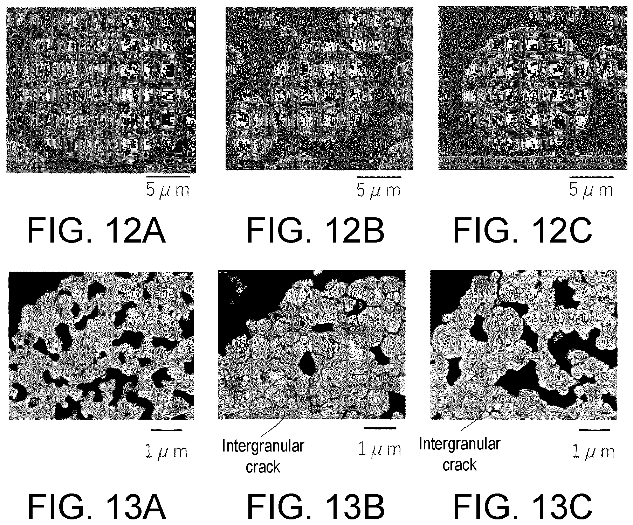

The residual lithium contents, particle strengths, porosities, and modal porosities of the positive electrode active materials of Example 8, Comparative Example 2, and Comparative Example 3 were measured. The results are shown in Table 6 (Table 6-1, Table 6-2). Also, cross-sectional SEM observation of the positive electrode active materials was performed. FIG. 12A shows a cross-sectional SEM image of Example 8, FIG. 12B shows a cross-sectional SEM image of Comparative Example 2, and FIG. 12C shows a cross-sectional SEM image of Comparative Example 3.

(Preparation of Positive Electrode)

Next, lithium-ion secondary batteries were produced by using the positive electrode active materials synthesized in Example 8, Comparative Example 2, and Comparative Example 3 as the positive electrode materials by the same method as Example 3, except that graphite was used for the negative electrode and a 30 mm × 35 mm rectangular positive electrode was used.

(Initial discharge capacity and charge-discharge cycle properties (capacity retention rate, resistance increase rate) by full cell)

Subsequently, a lithium-ion secondary battery was produced by using the produced positive electrode, a negative electrode using 35 mm × 40 mm graphite, and a separator. As the separator, a porous separator made of polypropylene with a thickness of 30 $\mu$m was used. The positive electrode and the negative electrode were opposed to each other through the separator in a non-aqueous electrolyte solution to assemble the lithium-ion secondary battery. As the non-aqueous electrolyte solution, a solution in which $LiPF_6$ was dissolved to 1.0 mol/L in a solvent obtained by mixing ethylene carbonate and dimethyl carbonate at a volume ratio of 3:7 was used. Also, 1.5% of vinylene carbonate (VC) was added as an additive.

The produced lithium-ion secondary battery was charged at 25°C, a constant current/constant voltage condition of 40 A/kg based on the mass standard of the positive electrode mixture, and an upper limit potential of 4.2 V. Then, the battery was discharged to a lower limit potential of 2.5 V at a constant current of 40 A/kg based on the mass standard of the positive electrode mixture, and the charge capacity and the discharge capacity were measured. After that, charging was performed at a constant current/constant voltage condition of 190 A/kg based on the mass standard of the positive electrode mixture and an upper limit potential of 4.2 V. Then, a cycle of discharging to a lower limit potential of 2.5 V at a constant current of 190 A/kg based on the mass standard of the positive electrode mixture was performed for a total of 300 cycles, and the discharge capacity after 300 cycles was measured. The fraction of the discharge capacity after 300 cycles relative to the initial discharge capacity was calculated as the capacity retention rate. Furthermore, the direct current resistance was measured at the initial cycle and after 300 cycles, and the fraction of the resistance after 300 cycles relative to the initial resistance was calculated as the resistance increase rate. The results are also shown in Table 6.

In Table 6-1, Item A4 is the remaining LiOH amount obtained from the positive electrode active material for Example 8 and Comparative Examples 2 and 3 by a titration apparatus, Item B4 in Table 6-1 is the remaining $Li_2CO_3$ amount obtained from the positive electrode active material for Example 8 and Comparative Examples 2 and 3 by a titration apparatus, Item C4 in Table 6-1 is the oil absorption amount (ml/100g) per 100 g of the positive electrode active material for Example 8 and Comparative Examples 2 and 3, Item D4 in Table 6-1 is the porosity (%) of the positive electrode active material for Example 8 and Comparative Examples 2 and 3, Item E4 in Table 6-1 is the modal pore diameter (nm) of the positive electrode active material for Example 8 and Comparative Examples 2 and 3, Item F4 in Table 6-1 is the particle strength (MPa) of the positive electrode active material for Example 8 and Comparative Examples 2 and 3, and Item G4 in Table 6-1 is the R value of the positive electrode active material for Example 8 and Comparative Examples 2 and 3.

In addition, Item A5 in Table 6-2 is the initial discharge capacity (Ah/kg) in full cells of the lithium-ion secondary batteries produced using the positive electrode active material for Example 8 and Comparative Examples 2 and 3, Item B5 in Table 6-2 is the capacity retention rate (%) in full cells of the lithium-ion secondary battery produced by using the positive electrode active material for Example 8 and Comparative Examples 2 and 3, and Item C5 in Table 6-2 is the resistance increase rate (%) of the lithium-ion secondary battery produced by using the positive electrode active material for Example 8 and Comparative Examples 2 and 3.

In both Table 6-1 and Table 6-2, EB8 is Example 8, Rf2 is Comparative Example 2, and Rf3 is Comparative Example 3.

In addition, the batteries after charge-discharge cycles were disassembled, and cross-sectional SEM images of the positive electrode active materials were observed. The results are shown in FIG. 13. FIG. 13A is an image of a cross-sectional SEM image of the positive electrode active material of Example 8, FIG. 13B is an image of a cross-sectional SEM image of the positive electrode active material of Comparative Example 2, and FIG. 13C is an image of a cross-sectional SEM image of the positive electrode active material of Comparative Example 3.

[Table 6-1]

|  | A4 | B4 | C4 (ml/100 g) | D4 (%) |
|---|---|---|---|---|
| EB8 | 0.35 | 0.08 | 27 | 12 |
| Rf2 | 0.61 | 0.18 | 25 | 4 |
| Rf3 | 0.87 | 0.21 | 28 | 12 |
|  | E4 (nm) | F4 (MPa) | G4 |  |
| EB8 | 178 | 59 | 0.42 |  |
| Rf2 | 214 | 59 | 0.43 |  |
| Rf3 | 281 | 23 | 0.43 |  |

[Table 6-2]

|  | A5 (Ah/kg) | B5 (Ah/kg) | C5 (%) |
|---|---|---|---|
| EB8 | 181 | 80 | 167 |
| Rf2 | 182 | 69 | 219 |
| Rf3 | 181 | 71 | 198 |

From Table 6-1, Example 8 exhibited less remaining LiOH and remaining $Li_2CO_3$ than Comparative Examples 2 and 3. In Example 8, after reacting the metal nickel powder with the lithium-containing compound, the mixture was further mixed with a lithium-containing compound and calcined. Therefore, it is considered that the reaction between the transition metal source and Li source was promoted, resulting in a reduction of remaining LiOH and remaining $Li_2CO_3$.

In addition, the porosity of Example 8 was 12%, larger than Comparative Example 2 and equivalent to Comparative Example 3. On the other hand, the modal pore diameter was 178 nm, smaller than Comparative Examples 2 and 3. Furthermore, from FIG. 12, it can be seen that Example 8 exhibited smaller pore diameters and a more uniform distribution than Comparative Examples 2 and 3. In Example 8, the lithium-containing compound was added in two stages: before granulation (pre-addition) and after granulation (post addition), and since the amount of the lithium-containing compound inside the granulated powder was small, it is considered that the pores were fewer and the pore diameter was smaller due to the mechanism described in FIG. 11(b).

Furthermore, the particle strength of Example 8 was 59 MPa, higher than the 23 MPa of Comparative Example 3 having the same porosity of 12%. The particle strength of Example 8 was the same strength as the 59 MPa of Comparative Example 2 having a porosity of 4%, and it is confirmed that Example 8 achieved both high porosity and high strength. This factor is considered to be due to the small modal pore diameter and a uniform distribution of pores.

Next, referring to the electrochemical properties in Table 6-2, the initial discharge capacities in full cells were equivalent in Example 8, Comparative Example 2, and Comparative Example 3. On the other hand, the capacity retention rate in full cells was 80% for Example 8, better than 69% for Comparative Example 2 and 71% for Comparative Example 3.

The factors for the favorable charge-discharge cycle properties of the positive electrode active material of Example 8 are considered. From Table 6-2, the resistance increase rate of Example 8 was lower than Comparative Examples 2 and 3, and it is considered that there was less deposition of by-products on the surface of the positive electrode active material in Example 8. This is considered to be because the positive electrode active material of Example 8 had less remaining LiOH and remaining $Li_2CO_3$, resulting in less formation of by-products. Furthermore, from FIG. 13, in Example 8, cracks cannot be confirmed in the positive electrode active material after charge-discharge cycles, while in Comparative Example 2 and Comparative Example 3, cracks were observed at grain boundaries. This is considered to be because the positive electrode active material of Example 8 can relieve stress accompanying charge-discharge cycles due to the high porosity, and can suppress cracks, such as stress cracking due to high strength, from occurring. From the above, it is considered that, due to less remaining LiOH and remaining $Li_2CO_3$, the positive electrode active material of Example 8 had a small resistance increase, and the occurrence of cracks was suppressed by achieving both high porosity and high strength. As a result, favorable charge-discharge cycle properties were achieved.

From the above, it is found that a lithium-ion secondary battery with favorable electrochemical properties can be obtained by a positive electrode active material that achieves remaining LiOH, high porosity, and high strength.

[Example 9]

A positive electrode active material was produced by the same method as Example 8, except that each raw material was weighed so that the molar ratio of metal elements Li:Ni:Co:Mn:Ti:Al became 1.03:0.92:0.03:0.00:0.03:0.02. Therefore, the target composition of the positive electrode active material of Example 9 was $Li_{1.03}Ni_{0.92}Co_{0.03}Ti_{0.03}Al_{0.02}O_2$.

[Example 10]

A precursor was produced by mixing lithium carbonate and the metal nickel powder with a V-type mixer so that lithium and nickel exhibited a molar ratio of Li:Ni of 0.26:0.85 like Example 8, followed by the oxidation process. Then, a positive electrode active material was produced by the same method as Example 8, except that the lithium-containing compound to be mixed with the precursor by post addition was lithium hydroxide, preliminary calcination was omitted, and the main calcination temperature was set to 800°C. The target composition of the positive electrode active material of Example 10 was $Li_{1.03}Ni_{0.85}Co_{0.03}Mn_{0.08}Ti_{0.03}Al_{0.01}O_2$ like Example 1.

The residual Li amounts and R values of the positive electrode active materials of Example 9 and Example 10 were measured and are shown in Table 7. Item A6 in Table 7 shows the remaining LiOH amount for Example 9 and Example 10, Item B6 in Table 7 shows the remaining $Li_2CO_3$ amount for Example 9 and Example 10, and Item C6 in Table 7 shows the R value for Example 9 and Example 10. Item D6 in Table 7 shows the initial discharge capacity in the lithium-ion secondary battery at the time of configuring the lithium-ion secondary battery, like Example 3, using the positive electrode active material for Example 10. In Table 7, EB9 is Example 9 and EB10 is Example 10.

[Table 7]

|  | A6 | B6 | C6 | D6 (Ah/kg) |
|---|---|---|---|---|
| EB9 | 0.28 | 0.35 | 0.45 | - |
| EB10 | 0.16 | 0.15 | 0.43 | 188 |

From Table 7, it is confirmed that even with a composition having a high Ni ratio or using lithium hydroxide as the lithium compound for post addition, a positive electrode active material with low remaining LiOH, low remaining $Li_2CO_3$, low R value, and stable crystal structure can be produced.

Next, in the production process shown in FIG. 5, a single crystal (single particle) positive electrode active material was produced by using a production method that added a first milling process (coarse milling process) in which the precursor and the M element compound were simultaneously subjected to wet milling during mixing of the precursor and the M element compound, a second milling process (fine milling process) in which fine milling was performed until the average particle diameter D50 reached a predetermined particle diameter before mixing the lithium-containing compound with the pulverized slurry obtained in the first milling process (coarse milling process), and a classification process for classification after the second milling process (fine milling process).

[Example 11]

As raw materials, lithium carbonate, metal nickel powder, cobalt carbonate, manganese carbonate, titanium oxide, and aluminum oxide were prepared, and each raw material was weighed so that the molar ratio of metal elements Li:Ni:Co:Mn:Ti:Al became 1.03:0.85:0.03:0.08:0.03:0.01. Similar to Example 1, the target composition of the positive electrode active material (hereinafter, the loaded composition of the positive electrode active material) was $Li_{1.03}Ni_{0.85}Co_{0.03}Mn_{0.08}Ti_{0.03}Al_{0.01}O_2$. For the metal nickel powder, metal nickel powder with D50 of 70 $\mu$m and D95 of 176 $\mu$m was used. Lithium carbonate and metal nickel powder corresponding to 25 mass% of the amount required according to the ratio were loaded into a V-type mixer so that lithium and nickel exhibited a molar ratio Li:Ni of 0.26:0.85. The mixture was mixed for 120 minutes to obtain a raw material mixed powder. Next, the raw material mixed powder was oxidized by performing an oxidation process at 700°C for 10 hours in a calcination furnace under atmospheric atmosphere to obtain a coarse precursor containing metal nickel powder in which a portion was lithiated. The process for producing the coarse precursor was the same as the process for producing the coarse precursor in Example 4. Since the raw materials used were also the same, the oxidation rate was 69%, like Example 4. Furthermore, carbon content measurement, cross-sectional SEM observation, and XRD measurement were performed on the coarse precursor, and the lithiation rate, oil absorption, oxidation (lithiation) distance, oxidation (lithiation) distance rate, $I_{LiNiO2}/I_{Ni}$, and $I_{LiNiO2}/I_{NiO}$ were calculated. The results were substantially the same as those in Example 4.

Next, the obtained coarse precursor was mixed with the raw material of the metal element M made of cobalt carbonate, manganese carbonate, titanium oxide, and aluminum oxide, and 200 g of the mixed powder was placed in a plastic pot container, 200 g of pure water and 200 g of zirconia balls (produced by Nikkato) with a ball diameter of 5 mm as media were added, and the mixture was pulverized at a rotation speed of 90 rpm for 40 hours to obtain a pulverized slurry (first milling process (coarse milling process)). The particle size distribution after coarse milling was measured.

Next, to finely pulverize the obtained pulverized slurry, wet milling was performed with a pulverizer to prepare a raw material slurry so that D50 became 0.3 $\mu$m (second milling process (fine milling process)). Subsequently, the obtained raw material slurry was dried with a blowtype dryer, then broken up with a mortar, and further classified with a sieve having a mesh opening of 45 $\mu$m. Then, the pulverized powder and lithium carbonate corresponding to 75 mass% of the amount required according to the molar ratio so that lithium and nickel exhibited a molar ratio of Li:Ni of 1.03:0.85 were loaded into a V-type mixer to obtain a mixed pulverized powder. The obtained mixed pulverized powder was pre-calcined to obtain a lithium metal composite oxide (calcination process). Specifically, preliminary calcination was performed at 700°C for 24 hours in an oxygen gas flow in a calcination furnace replaced with an oxygen gas atmosphere. Thereafter, main calcination was performed at 900°C for 10 hours in the oxygen gas flow in a calcination furnace replaced with the oxygen gas atmosphere to obtain a lithium metal composite oxide. The calcined powder obtained by the calcination process was broken up with a mortar and then classified by using a sieve with a back opening of 45 $\mu$m, and the powder under the sieve was used as the positive electrode active material.

[Example 12]

A positive electrode active material was produced by the same method as Example 11 except that the condition for main calcination was 900°C for 20 hours.

[Example 13]

A positive electrode active material was produced by the same method as Example 11 except that the condition for main calcination was 870°C for 20 hours.

[Example 14]

A positive electrode active material was produced by the same method as Example 11 except that lithium hydroxide was used as the lithium-containing compound to be mixed with the pulverized powder, preliminary calcination was not performed, and calcination was performed at 870°C for 20 hours.

[Example 15]

A positive electrode active material was produced by the same method as Example 14 except that the calcination condition was 840°C for 20 hours.

The residual Li amounts, R values, and primary particle diameters of the positive electrode active materials of Examples 11 to 15 were measured and are shown in Table 8. Item A8 in Table 8 shows the residual LiOH amount for Examples 11 to 15, Item B8 in Table 8 shows the residual $Li_2CO_3$ amount for Examples 11 to 15, Item C8 in Table 8 shows the R value for Examples 11 to 15, and Item D8 in Table 8 shows the primary particle diameter for Examples 11 to 15. Item E8 in Table 8 shows the initial discharge capacity in the lithium-ion secondary battery at the time of configuring the lithium-ion secondary battery, like Example 3, by using the positive electrode active materials of Examples 11, 13, 14, and 15. In Table 8, EB11 to EB15 are Examples 11 to 15.

[Table 8]

|  | A8(mass%) | B8(mass%) | C8 | D8(nm) | E8(Ah/kg) |
|---|---|---|---|---|---|
| EB11 | 0.61 | 0.75 | 0.46 | 1500 | 166 |
| EB12 | 0.43 | 0.52 | 0.48 | 1700 | - |
| EB13 | 0.24 | 0.32 | 0.46 | 1200 | 185 |
| EB14 | 0.83 | 0.43 | 0.46 | 1700 | 165 |
| EB15 | 0.92 | 0.75 | 0.43 | 1500 | 188 |

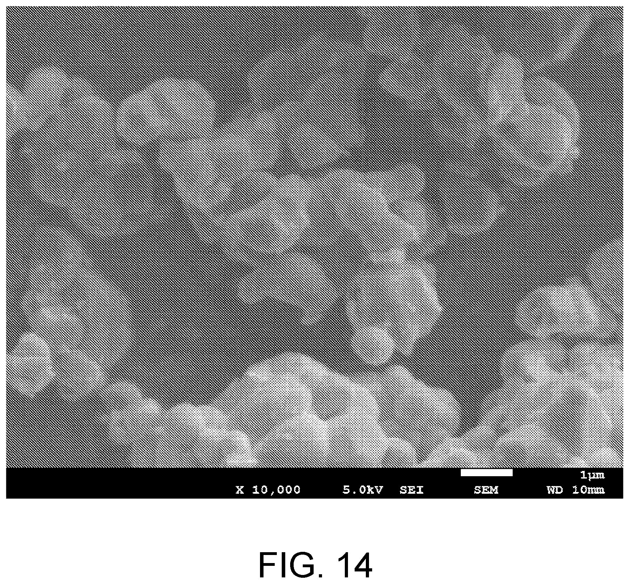

According to Table 8, Examples 11 to 15 exhibited average primary particles exceeding 1 $\mu$m, resulting in the so-called single crystal positive electrode active materials. Moreover, even if the granulation process was not performed, the R values were relatively low values of 0.48 or less, and it is confirmed that the positive electrode active materials with relatively favorable crystallinity can be obtained. The SEM image of the positive electrode active material in Example 13 is shown in FIG. 14. It can be confirmed that the crystal grains themselves of the positive electrode active material are also favorable.

Moreover, in the case where the post-added Li-containing compound is lithium hydroxide, a tendency for a decrease in R values was observed. In addition, the average primary particle diameter was smaller when the calcination condition was a low temperature or a short time. A tendency for the initial discharge capacity to become higher was observed as the average primary particle diameter became smaller.

<Preferred aspects of the disclosure>

Hereinafter, preferred aspects of the disclosure are described.

According to an aspect of the disclosure, a method for producing a precursor of a positive electrode active material for a lithium-ion secondary battery is provided. The method includes: a mixing process of mixing metal nickel powder and a lithium-containing compound; and an oxidation process of, after mixing, oxidizing the metal nickel powder. A precursor obtained after the oxidation process is a precursor including a lithium metal oxide having a peak at $2\theta = 43.5°$ or more and 44.0° or less in X-ray powder diffraction measurement.

Preferably, a lithiation rate of the precursor indicating a proportion of the metal nickel powder having reacted with the lithium is 8% or more.

Preferably, an average particle diameter of the metal nickel powder exceeds 20 $\mu$m, and a lithiation rate of the precursor is 10% or more.

Preferably, the precursor obtained after the oxidation process includes nickel oxide in which an oxidation rate indicating a ratio of an amount of oxidated nickel among a total amount of Ni that is included in the precursor is 10% or more and less than 100%.

Preferably, in a case where an amount of a lithium compound necessary for producing the positive electrode active material for the lithium-ion secondary battery is set to be 100 mass%, a mixing amount of a compound including the lithium in the mixing process is 10 mass% or more and less than 100 mass%.

In addition, according to an aspect of the disclosure, in a calcination process, mixed powder is obtained by mixing the precursor produced according to the method for producing the precursor of the positive electrode material for the lithium-ion secondary battery and at least one of a lithium-containing compound and a compound including a metal element M other than lithium and nickel, and then the positive electrode active material is obtained by calcinating the mixed powder at 700°C or more and 900°C or less.

Preferably, a milling process of pulverizing the mixed powder; and a granulation process of, after the milling process, granulating the pulverized mixed powder to form granulated powder are provided, and the calcination process is performed with respect to the granulated powder. Preferably, a milling process of pulverizing the mixed powder; and a granulation process of, after the milling process, granulating the pulverized mixed powder to form granulated powder are provided. A mixed amount of a lithium-containing compound in the precursor is less than 100 mass%, a remaining mixed amount of the lithium-containing compound is added after the granulation process to form mixed granulated powder, and the calcination process is performed with respect to the mixed granulated powder.

Preferably, the milling process includes a first milling process and a second milling process in which milling is finer than the first milling process.

Preferably, a medium size adopted in the second milling process is smaller than a medium size adopted in the first milling process.

Preferably, a lithium-containing compound mixed before the oxidation process and a lithium-containing compound added after the granulation process are different compounds, and a melting point of the lithium-containing compound mixed before the oxidation process is higher than a melting point of the lithium-containing compound added after the granulation process. Preferably, the positive electrode active material for the lithium-ion secondary battery is represented by a composition Formula (A) as follows:

$$Li_{1+a}Ni_bM_{(1-b)}O_{2+\alpha} \cdots \qquad (A)$$

(In Formula (A), M represents a metal element other than Li and Ni, and a, b, and $\alpha$ are numbers satisfying: $-0.1 \leqq a \leqq 0.2$, $0.5 \leqq b \leqq 1.0$, $-0.2 \leqq \alpha \leqq 0.2$.)

In addition, it is preferable to include a positive electrode active material represented by a composition Formula (B) as follows:

$$Li_{1+a}Ni_bCo_cM1_dX_eO_{2+\alpha} \cdots \qquad (B)$$

[In Formula (2), M1 represents at least one selected from Al and Mn, X represents at least one metal element other than Li, Ni, Co, Al, and Mn, and a, b, c, d, e and $\alpha$ are respectively numbers satisfying: $-0.1 \leqq a \leqq 0.2$, $0.5 \leqq b \leqq 1.0$, $0 \leqq c \leqq 0.20$, $0 \leqq d \leqq 0.30$, $0 \leqq e \leqq 0.1$, $b+c+d+e=1$, and $-0.2 < \alpha < 0.2$.] Moreover, preferably, M1 may include at least one element selected from a group consisting of tungsten, magnesium, titanium, zirconium, molybdenum and niobium.

In addition, according to an aspect of the disclosure, a precursor of a positive electrode active material for a lithium-ion secondary battery includes: nickel, lithium, and a lithium metal oxide having a peak at $2\theta = 43.5°$ or more and $44.0°$ or less in X-ray powder diffraction measurement of the precursor. A lithiation rate is 8% or more.

Preferably, a lithium nickel oxide having a peak at $2\theta = 43.5°$ or more and $44.0°$ or less in the X-ray powder diffraction measurement of the precursor is provided, and an intensity ratio $I_{LiNiO2}/I_{Ni}$ between a peak intensity $I_{LiNiO2}$ of the peak and a peak intensity $I_{Ni}$ of a peak at $2\theta = 44.0°$ or more and $45.0°$ or less attributed to metal nickel is 0.5 or more.

Preferably, remaining LiOH is 0.6 mol% or less, a porosity is 5 vol% or more and 15 vol% or less, a modal porous diameter is 10 nm or more and 250 nm or less, a particle intensity is 30 MPa, and nickel and lithium are included. Alternatively, it is preferably provided in a positive electrode active material represented by composition Formula (A) or a positive electrode active material represented by composition Formula (B) as follows.

$$Li_{1+a}Ni_bCo_cM1_dX_eO_{2+\alpha} \cdots \qquad (B)$$

[In Formula (2), M1 represents at least one selected from Al and Mn, X represents at least one metal element other than Li, Ni, Co, Al, and Mn, and a, b, c, d, e and $\alpha$ are respectively numbers satisfying: $-0.1 \leqq a \leqq 0.2$, $0.5 \leqq b \leqq 1.0$, $0 \leqq c \leqq 0.20$, $0 \leqq d \leqq 0.30$, $0 \leqq e \leqq 0.1$, $b+c+d+e=1$, and $-0.2 < \alpha < 0.2$.] Moreover, preferably, M1 includes at least one element selected from a group consisting of tungsten, magnesium, titanium, zirconium, molybdenum and niobium.

Moreover, preferably, M1 may include at least one element selected from a group consisting of tungsten, magnesium, titanium, zirconium, molybdenum and niobium.

Preferably, an R value calculated based on an intensity $I_{106}$ calculated from an integrated value of a peak identified as a 006 plane, an intensity $I_{102}$ calculated from an integrated value of a peak identified as a 102 plane, and an intensity $I_{101}$ calculated from an integrated value of a peak identified as a 101 plane in X ray diffraction measurement by using a formula as follows is 046 or less:

$$R \text{ value} = (I_{006} + I_{102})/I_{101}.$$

**Claims**

1.  A method for producing a precursor of a positive electrode active material for a lithium-ion secondary battery, the method comprising:

    a mixing process of mixing metal nickel powder and a lithium-containing compound; and
    an oxidation process of, after mixing, oxidizing the metal nickel powder,
    wherein the precursor obtained after the oxidation process is the precursor comprising a lithium metal oxide having a peak at $2\theta = 43.5°$ or more and $44.0°$ or less in X-ray powder diffraction measurement.

2.  The method as claimed in claim 1, wherein a lithiation rate of the precursor indicating a proportion of the metal nickel powder having reacted with the lithium is 8% or more.

3.  The method as claimed in claim 1, wherein an average particle diameter of the metal nickel powder exceeds $20\ \mu m$, and a lithiation rate of the precursor is 10% or more.

4.  The method as claimed in claim 1, wherein the precursor obtained after the oxidation process comprises nickel oxide in which an oxidation rate indicating a ratio of an amount of oxidated nickel among a total amount of Ni that is comprised is 10% or more and less than 100%.

5.  The method as claimed in claim 1, wherein in a case where an amount of a lithium compound necessary for producing the positive electrode active material for the lithium-ion secondary battery is set to be 100 mass%, a mixing amount of a compound comprising the lithium in the mixing process is 10 mass% or more and less than 100 mass%.

6.  A method for producing a positive electrode active material for a lithium-ion secondary battery, the method comprising: a calcination process of obtaining mixed powder by mixing the precursor produced according to the method as claimed in claim 1 and at least one of a lithium-containing compound and a compound comprising a metal element M other than lithium and nickel, and then obtaining the positive electrode active material by calcinating the mixed powder at 700°C or more and 900°C or less.

7.  The method as claimed in claim 6, comprising: a milling process of pulverizing the mixed powder; and a granulation process of, after the milling process, granulating the pulverized mixed powder to form granulated powder, wherein the calcination process is performed with respect to the granulated powder.

8.  The method as claimed in claim 6, comprising: a milling process of pulverizing the mixed powder; and a granulation process of, after the milling process, granulating the pulverized mixed powder to form granulated powder, wherein a mixed amount of a lithium-containing compound in the precursor is less than 100 mass%, a remaining mixed amount of the lithium-containing compound is added after the granulation process to form mixed granulated powder, and the calcination process is performed with respect to the mixed granulated powder.

9.  The method as claimed in claim 7, wherein the milling process comprises a first milling process and milling finer than the first milling process.

10. The method as claimed in claim 9, wherein a medium size adopted in the second milling process is smaller than a medium size adopted in the first milling process.

11. The method as claimed in claim 7, wherein a lithium-containing compound mixed before the oxidation process and a lithium-containing compound added after the granulation process are different compounds, and a melting point of the lithium-containing compound mixed before the oxidation process is higher than a melting point of the lithium-containing compound added after the granulation process.

12. The method as claimed in claim 6, wherein the positive electrode active material for the lithium-ion secondary battery is represented by a composition Formula (1) as follows:

$$\text{Li}_{1+a}\text{Ni}_b\text{M}_{(1-b)}\text{O}_{2+\alpha} \cdots \qquad (1),$$

(wherein in Formula (1), M represents a metal element other than Li and Ni, and a, b, and $\alpha$ are numbers satisfying: $-0.1 \leqq a \leqq 0.2$, $0.5 \leqq b \leqq 1.0$, $-0.2 \leqq \alpha \leqq 0.2$.)

13. A precursor of a positive electrode active material for a lithium-ion secondary battery, the precursor comprising: nickel, lithium, and a lithium metal oxide having a peak at $2\theta = 43.5°$ or more and $44.0°$ or less in X-ray powder diffraction measurement of the precursor, wherein a lithiation rate is 8% or more.

14. The precursor as claimed in claim 13, comprising a lithium nickel oxide having a peak at $2\theta = 43.5°$ or more and $44.0°$ or less in the X-ray powder diffraction measurement of the precursor, and an intensity ratio $I_{\text{LiNiO2}}/I_{\text{Ni}}$ between a peak intensity $I_{\text{LiNiO2}}$ of the peak and a peak intensity $I_{\text{Ni}}$ of a peak at $2\theta = 44.0°$ or more and $45.0°$ or less attributed to metal nickel is 0.5 or more.

15. A positive electrode active material for a lithium-ion secondary battery, wherein remaining LiOH is 0.6 mol% or less, a porosity is 5 vol% or more and 15 vol% or less, a modal porous diameter is 10 nm or more and 250 nm or less, a particle intensity is 30 MPa, and the positive electrode active material comprises nickel and lithium.

16. The positive electrode active material as claimed in claim 15, wherein an R value calculated based on an intensity $I_{106}$ calculated from an integrated value of a peak identified as a 006 plane, an intensity $I_{102}$ calculated from an integrated value of a peak identified as a 102 plane, and an intensity $I_{101}$ calculated from an integrated value of a peak identified as a 101 plane in X ray diffraction measurement by using a formula as follows is 046 or less:

$$R \text{ value} = (I_{006} + I_{102})/I_{101}.$$

FIG. 1

FIG. 2

FIG. 3A          FIG. 3B          FIG. 3C

FIG. 4A

FIG. 4B

FIG. 5

Precursor of positive electrode active material (including a portion of Li-containing compound)

Compound including metal M other than Li and Ni

Mill

Granulate

Residual of Li-containing compound

Mix

Calcinate

Positive electrode active material

## FIG. 6

Coarse precursor of positive electrode active material (including a portion of Li-containing compound)

Compound including metal M other than Li and Ni

First milling process

Second milling process

Granulate

Residual of Li-containing compound

Mix

Calcinate

Positive electrode active material

## FIG. 7

FIG. 8

FIG. 9

FIG. 10

FIG. 11A

FIG. 11B

5 μm

**FIG. 12A**

5 μm

**FIG. 12B**

5 μm

**FIG. 12C**

1 μm

**FIG. 13A**

Intergranular
crack

1 μm

**FIG. 13B**

Intergranular
crack

1 μm

**FIG. 13C**

X 10,000    5.0kV   SEI      SEM      WD 10mm    1μm

FIG. 14

## INTERNATIONAL SEARCH REPORT

| International application No. |
| --- |
| **PCT/JP2024/033304** |

| A. | CLASSIFICATION OF SUBJECT MATTER |
| --- | --- |

*H01M 4/525*(2010.01)i; *C01G 53/00*(2006.01)i; *H01M 4/505*(2010.01)i
FI:　H01M4/525; C01G53/00 A; H01M4/505

According to International Patent Classification (IPC) or to both national classification and IPC

| B. | FIELDS SEARCHED |
| --- | --- |

Minimum documentation searched (classification system followed by classification symbols)

　　H01M4/525; C01G53/00; H01M4/505

Documentation searched other than minimum documentation to the extent that such documents are included in the fields searched

　　Published examined utility model applications of Japan 1922-1996
　　Published unexamined utility model applications of Japan 1971-2024
　　Registered utility model specifications of Japan 1996-2024
　　Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 2017-152370 A (PANASONIC INTELLECTUAL PROPERTY MANAGEMENT CO., LTD.) 31 August 2017 (2017-08-31) | 13-14 |
| A | paragraphs [0149]-[0150], [0154]-[0156] | 1-12 |
| X | JP 9-175825 A (ANSEI DENKAN KK) 08 July 1997 (1997-07-08) | 13-14 |
| A | paragraphs [0004], [0021]-[0022], [0032], example 10 | 1-12 |
| X | JP 7318842 B1 (PROTERIAL, LTD.) 01 August 2023 (2023-08-01) | 15-16 |
| A | paragraphs [0058], [0082], [0086], [0121], tables 2-1, 2-2, example 11 | 1-12 |
| A | WO 2010/082240 A1 (MURATA MANUFACTURING CO., LTD.) 22 July 2010 (2010-07-22) example 1 | 1-12 |

☑ Further documents are listed in the continuation of Box C.　　☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **14 November 2024** | **26 November 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

# EP 4 783 261 A1

| INTERNATIONAL SEARCH REPORT | International application No. |
|---|---|
| | **PCT/JP2024/033304** |

### C. DOCUMENTS CONSIDERED TO BE RELEVANT

| Category* | Citation of document, with indication, where appropriate, of the relevant passages | Relevant to claim No. |
|---|---|---|
| A | JP 9-241026 A (SHARP KABUSHIKI KAISHA) 16 September 1997 (1997-09-16)<br>paragraph [0017] | 1-12 |
| A | JP 10-326620 A (MITSUBISHI HEAVY INDUSTRIES, LTD.) 08 December 1998<br>(1998-12-08)<br>paragraphs [0012], [0016]-[0017] | 1-12 |

Form PCT/ISA/210 (second sheet) (July 2022)

44

## INTERNATIONAL SEARCH REPORT
### Information on patent family members

| | International application No. |
|---|---|
| | **PCT/JP2024/033304** |

| Patent document cited in search report | | | Publication date (day/month/year) | Patent family member(s) | | | Publication date (day/month/year) |
|---|---|---|---|---|---|---|---|
| JP | 2017-152370 | A | 31 August 2017 | US 2017/0244104 A1 paragraphs [0155]-[0156], [0159]-[0162] CN 107104232 A | | | |
| JP | 9-175825 | A | 08 July 1997 | US 5914094 A column 1, line 55 to column 2, line 8, column 5, line 50 to column 6, line 15, column 7, lines 25-37, example 10 KR 10-0146812 B1 KR 10-0146811 B1 KR 10-1997-0069880 A | | | |
| JP | 7318842 | B1 | 01 August 2023 | EP 4407713 A1 paragraphs [0063], [0087], [0091], [1215], tables 2-1, 2-2, example 11 KR 10-2024-0056816 A CN 117730436 A WO 2023/047974 A1 | | | |
| WO | 2010/082240 | A1 | 22 July 2010 | (Family: none) | | | |
| JP | 9-241026 | A | 16 September 1997 | US 5817436 A column 3, lines 2-26 EP 794155 A1 | | | |
| JP | 10-326620 | A | 08 December 1998 | US 5911920 A column 3, lines 34-37, column 5, lines 6-35 | | | |

Form PCT/ISA/210 (patent family annex) (July 2022)

**REFERENCES CITED IN THE DESCRIPTION**

**Patent documents cited in the description**

- JP 2015002120 A
- WO 2020066262 A

- WO 2010082240 A